# EUROPEAN PATENT SPECIFICATION

(11) **EP 2 982 165 B1**
(45) Date of publication and mention of the grant of the patent: **15.11.2017**
(21) Application number: 14718192.9
(22) Date of filing: 25.03.2014
(51) Int. Cl.: H04W 24/10, H04W 16/28

(54) **METHODS OF OPERATING RADIO ACCESS NETWORK BASE STATIONS AND RELATED NETWORK NODES**
VERFAHREN ZUM BETRIEB VON BASISSTATIONEN EINES FUNKZUGANGSNETZWERKS UND ZUGEHÖRIGE NETZWERKKNOTEN
PROCÉDÉS DE FONCTIONNEMENT DES STATIONS DE BASE D'UN RÉSEAU RADIO ET NOEUDS DE RÉSEAU ASSOCIÉS

(30) Priority: 05.04.2013 US 201361808997 P
(43) Date of publication of application: 10.02.2016
(73) Proprietor: Telefonaktiebolaget LM Ericsson (publ), 164 83 Stockholm (SE)
(72) Inventor: CENTONZA, Angelo, Winchester SO225BA (GB); GUNNARSSON, Fredrik, S-587 50 Linköping (SE)
(74) Representative: Ericsson
(86) International application number: PCT/SE2014/050359
(87) International publication number: WO 2014/163553

(56) References cited:
- EP-A1- 1 978 769
- WO-A1-2012/152306
- WO-A1-2012/158959
- WO-A1-2013/048331
- Daniela Laselva ET AL: "Self-Optimisation" In: "LTE Self-Organising Networks (SON)", 9 December 2011 (2011-12-09), John Wiley & Sons, Ltd, Chichester, UK, XP055091508, ISBN: 978-1-11-997067-5 pages 135-234, DOI: 10.1002/9781119961789.ch5, abstract
- "LTE; Evolved Universal Terrestrial Radio Access (E-UTRA) and Evolved Universal Terrestrial Radio Access Network (E-UTRAN); Overall description; Stage 2 (3GPP TS 36.300 version 11.4.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.4.0, 1 February 2013 (2013-02-01), XP014156740, cited in the application
- NOKIA SIEMENS NETWORKS: "Detailed scope for the Rel.12 SON study item", 3GPP DRAFT; R3-130074 SON_SI_SCOPE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Malta; 20130128 - 20130201 19 January 2013 (2013-01-19), XP050671001, Retrieved from the Internet: URL:http://www.3gpp.org/ftp/tsg_ran/WG3_Iu /TSGR3_79/Docs/ [retrieved on 2013-01-19] cited in the application

## Description

### TECHNICAL FIELD

The present disclosure relates communications, and more particularly, to methods of operating base stations in radio access network and related network nodes.

### BACKGROUND

During the course of standardization up to Release 11, a number of features were standardized to autonomously improve/optimize mobility, including load balancing, coverage, and capacity. Some of these features include Mobility Robustness Optimization (MRO) and Mobility Load Balancing (MLB).

In the course of Release 12, a new Study Item was started. As described in RP-122027, active antennas may allow the creation of multiple vertical and horizontal beams making deployment dynamic thereby enabling dynamic cell splitting/merging to handle changing load conditions. For example, beams may be steered to distribute capacity precisely according to actual traffic mix, traffic location, and/or user demands. Active antennas may thus be particularly useful for suburban and rural areas, where fixed deployment of pico cells is expensive, but the network may face congestion situations nonetheless. SON can automate the network deployment using active antennas. These scenarios may open up discussions on how to design new solutions that would enable a Self Optimized Network (SON) to automatically adjust to the changes introduced by Active Antenna Systems (AAS).

### LTE

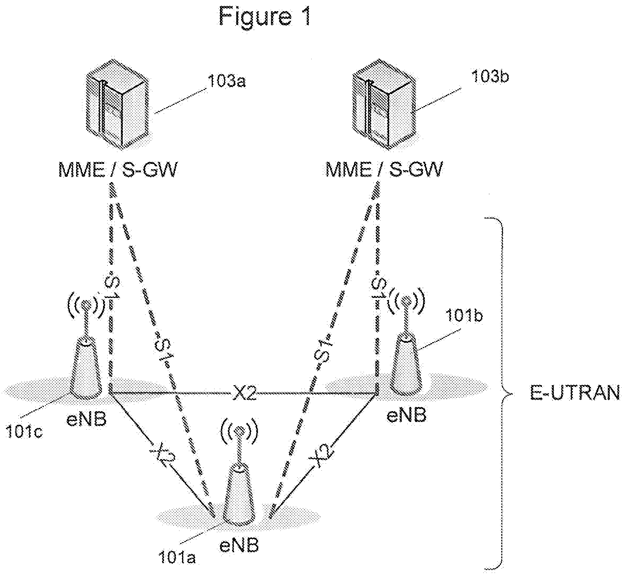

Figure 1 illustrates an LTE architecture including logical interfaces (X2 interfaces) between base stations (also referred to as evolved nodeBs or eNBs) 101a, 101b, and 101c and logical interfaces (S1 interfaces) between each eNB and a respective Mobility Management Entity Serving Gateway (MME/S-GW) 103a and 103b.

An Evolved Universal Terrestrial Radio Access Network (E-UTRAN) includes a plurality of eNB nodes, which are connected to each other via an X2 interface(s). Both the S1 and the X2 interfaces can be divided into control plane (dashed lines) and user plane (solid lines) parts. While E-UTRAN is discussed by way of example, embodiments disclosed herein may be applied in other networks/standards (e.g., GSM, UTRAN, etc.). E-UTRAN is discussed herein merely by way of example.

### Handover in LTE

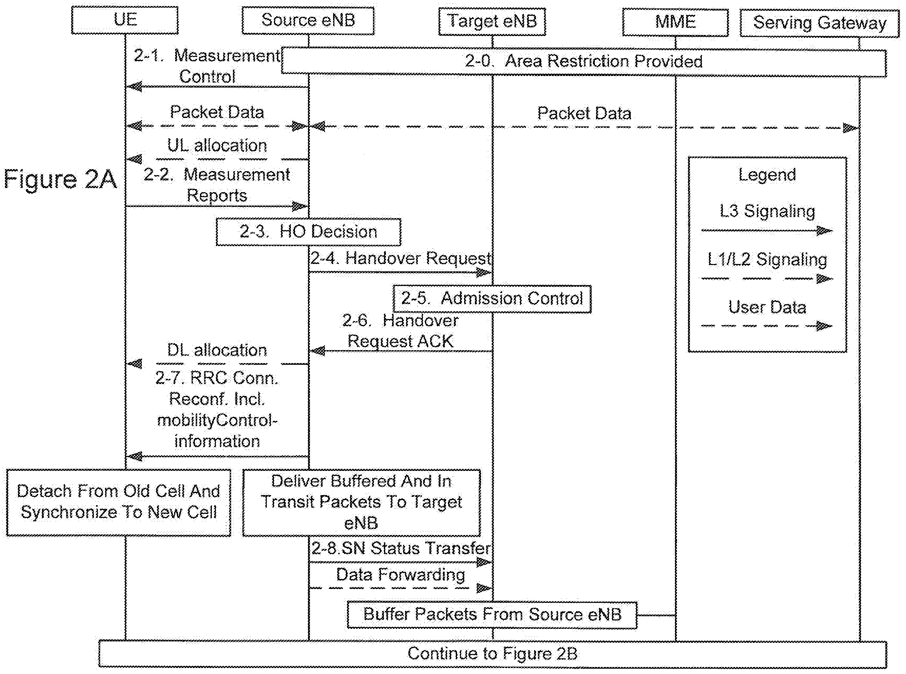

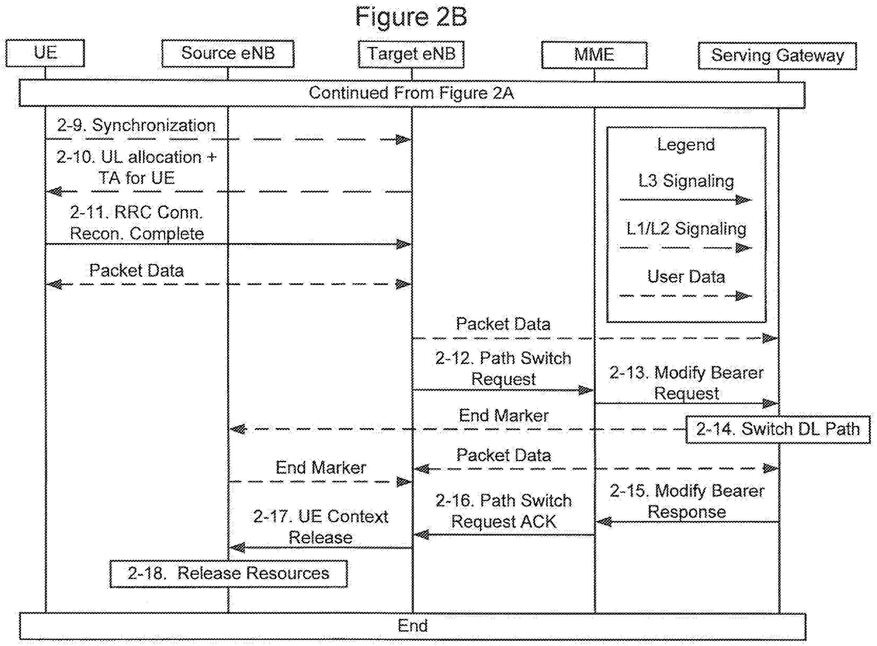

Figures 2A and 2B illustrates X2 Handover in LTE in accordance with 3GPP TS 36.300, version 11.4.0, entitled "E-UTRAN overall description."

Handover is a significant aspect of any mobile communication system where the system tries to provide service continuity of wireless terminals (also referred to as User Equipment nodes, user equipment, UE, etc.) by transferring the connection of a UE from one cell to another depending on factors such as relative signal strengths, load conditions, service requirements, etc. The provision of efficient/effective handovers (reduced/minimum number of unnecessary handovers, reduced/minimum number of handover failures, reduced/minimum handover delay, etc.), may affect not only the Quality of Service (QoS) of the end user but also overall mobile network capacity and/or performance.

In LTE (Long-Term Evolution), UE-assisted, network controlled handover may be used. In such systems, the network configures the UE to send measurement reports, and based on these reports, the UE is moved (if useful/required and if possible) to an appropriate cell that will provide service continuity and/or quality. Handover may be performed via an X2 connection, whenever available, and if not, using an S1 connection (i.e., involving the Core Network or CN). The X2 Handover process is shown in Figures 2A and 2B. The handover procedure can be sub-divided into three stages of preparation (initiation), execution, and completion.

Based on measurement results the source eNB receives from the UE during the preparation stage (e.g., using measurement control signaling 2-1 and measurement reports 2-2), the source eNB decides whether to handover the connection to another eNB (referred to as a target eNB) or not (e.g., HandOver Decision 2-3). If the decision is made to handover, the source eNB sends a HANDOVER REQUEST message 2-4 to the target eNB.

If the target eNB is able to admit the UE (e.g., Admission Control 2-5 and HandOver Request ACK 2-6), a message is sent to the UE (RRC Connection Reconfiguration Mobility Control Information 2-7) to initiate the handover, and the handover execution stage is entered. Downlink (DL) data arriving at the source eNB for the UE is then forwarded to the new target eNB.

The handover completion stage is entered once the target eNB and the UE are synchronized (SN Status Transfer 2-1, Synchronization 2-9, and/or UL Allocation and TA 2-10) and a handover confirm message (RRC Connection Reconfiguration Complete 2-11) is received by the target eNB. After a proper setup of the connection with the target eNB is performed (including Path Switch Request 2-12, Modify Bearer Request 2-13, and switching of the DL path 2-14 in the serving gateway), the old connection is released (Modify Bearer Response 2-15, Path Switch Request 2-16, UE Context Release 2-17, and Release Resources 2-18) and any remaining data in the source eNB that is destined for the UE is forwarded to the target eNB. Then normal packet flow can ensue through the target eNB.

### Handover measurement triggering

A UE measurement report configuration includes the reporting criteria (whether it is periodic or event triggered) as well as the measurement information that the UE has to report. The following event-triggered criteria are specified for intra-RAT (intra Radio Access Technology) measurement reporting in LTE 0:
Event A1, Serving cell becomes better than absolute threshold;
Event A2, Serving cell becomes worse than absolute threshold;
Event A3, Neighbor cell becomes better than an offset relative to the serving cell;
Event A4, Neighbor cell becomes better than absolute threshold; and
Event A5, Serving cell becomes worse than one absolute threshold and neighbor cell becomes better than another absolute threshold.

### Issues related to Handover

As the brief description relating to Handover Measurement Triggering indicates, handover in LTE (Long Term Evolution) is controlled via several parameters. Incorrect parameter settings can lead to problems such as Radio Link Failure (RLF), Handover Failure (HOF), and/or Ping-pong Handover (also known as Handover Oscillation).

### Radio Link Failure

If the handover parameters are set in such a way that the UE does not report handover measurements on time, the UE may lose the connection with the original cell before handover is initiated. As described in 3GPP TS 36.331 version 11.2.0, entitled "Radio Resource Control," when the UE receives a certain number of (N310) consecutive "out of sync" indications from the lower layer, the UE assumes a physical layer problem is ensuing, and a timer (T310) is started. If the UE doesn't receive a certain number of (N311) consecutive "in sync" indications from the lower layer before timer T310 expires, RLF is detected. RLF is also detected when a random access problem is indicated from MAC or upon indication that the maximum number of RLC retransmissions has been reached.

### Handover Failure

Handover Failure (HOF) occurs if the connection with the original cell is lost while HO is ongoing with the target. When the UE receives a HO command (i.e. RRCConnectionReconfigurationRequest with mobilityControlInfo, as shown in Figures 2A and 2B), it starts a timer (T304), and if this timer expires before the HO is completed (i.e. RRCConnectionReconfigurationComplete message is sent by the UE), a HOF is detected.

### Ping-pong Handover / handover oscillation

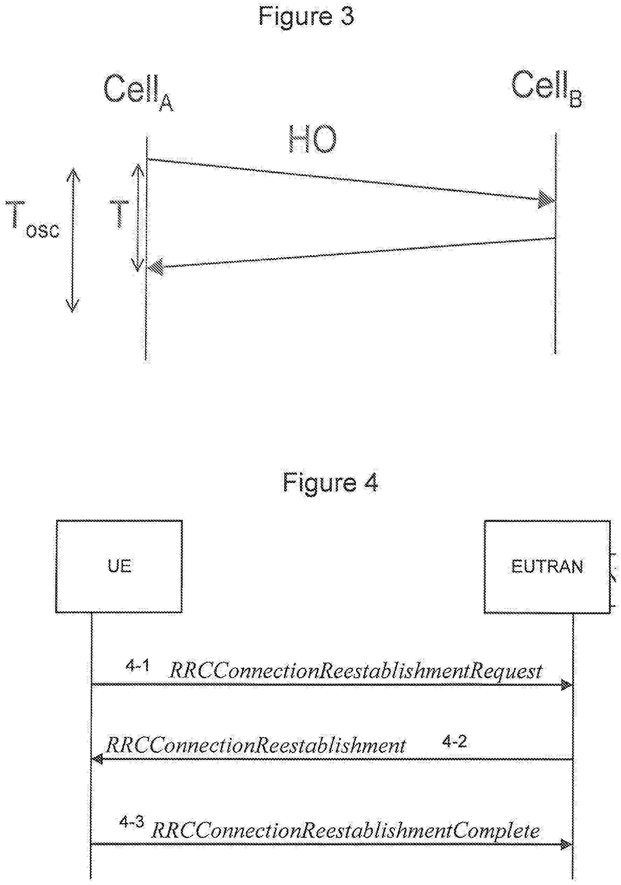

Improper setting of handover parameters can make the UE handover back and forth between two neighboring cells. An example of this is a setting that makes the triggering conditions for the handover events (e.g., A3) valid between the source and neighbor cells at the same time. Figure 3 illustrates ping-pong handover (also referred to as handover oscillation). A UE is said to have experienced handover oscillation if it stays in a target cell (Cell_{B}) for duration (T) that is less than the handover oscillation threshold (T_{OSC}), before it is handed back to the source cell (Cell_{A}). The oscillation rate can be defined as a ratio between the number of oscillations and the total number of HOs (HandOvers).

There is an upper boundary for an acceptable oscillation rate originating, for example, from core network load. Also the oscillation rate is related to end-user performance. On one hand, oscillation may be harmful because it may induce additional signaling and/or delays, and on the other hand, oscillations may allow the user to be connected to the best cell. This should be balanced for the end-user to experience a desired level of performance.

### RRC Connection Reestablishment

When a RLF or HOF is detected by the UE, the UE starts a timer (T311) and tries to re-establish the connection to the best available cell (e.g., the source cell, another cell belonging to the same source eNB or a neighbor cell belonging to another eNB). This is known as RRC (Radio Resource Control) Connection Reestablishment, and is shown in Figure 4. The UE transmits an RRCConnectionReestablishmentRequest 4-1 to the EUTRAN node, the EUTRAN node transmits an RRCConnectionReestablishment message 4-2 to the UE, and the UE transmits an RRCConnectionReestablishmentComplete message 4-3. The UE includes the following information in the re-establishment request: Physical Cell ID (PCI) of the last cell the UE was connected to before RLF; UE Identity including the C-RNTI (Cell Radio-Network Temporary Identifier) as well as MAC ID (Medium Access Control Identifier) for context lookup, using which the last serving cell can identify the UE; and Re-establishment cause (e.g., whether the request is due to handover failure, reconfiguration failure, or other causes).

If the UE context is found in the cell (if it is the source cell or if it was a cell prepared for handover, i.e., handover was ongoing when the RLF happened and the cell where the UE re-appeared already has the UE context, which was communicated to it from the source cell during Handover Request message exchange), the connection is re-established. Otherwise (if UE context is not available, or re-establishment did not succeed before T311 expires), the UE goes to IDLE mode and tears down all the active bearers, if any, and may restart the bearer setups if needed.

### Mobility Robustness Optimization (MRO)

Configuring all the HO parameters manually to reduce/avoid occurrence of the aforementioned problems may be too expensive and can be challenging. As such, Mobility Robustness Optimization (MRO) has been introduced in 3GPP to automate the dynamic configuration of handover parameters. Briefly, MRO tries to identify the following three situations (too late HO, too early HO, HO to wrong cell), and based on the statistical occurrence of these situations, MRO tries to adjust the HO parameters.

Too Late HO occurs when a UE is handed over late to the target cell, so that the link to the source cell breaks before completing the handover.

Too Early HO occurs when a UE is handed over to a candidate cell too early resulting in a radio link or handover failure in the target cell. The UE returns soon to the source cell via re-establishment procedures.

Handover to wrong cell occurs when a UE is handed over to one target cell but it experiences a RLF within a short duration after that in the target cell and the UE re-establishes the connection at another cell. A proper parameter setting would most probably have led to the handing over of the UE to the last target cell to begin with.

MRO tries to gather statistics on the occurrence of Too Late HOs, Too Early HOs, and HO to the wrong cell, and these statistics can be used to adjust the handover parameters. One or more of the following handover parameters controlling the event driven reporting of the UE can be adjusted using MRO: Threshold indicating how much stronger a certain candidate cell needs to be before it is reported to the serving cell; Filter coefficient(s) applied to the measurement before evaluation triggers are considered; and/or Time to trigger meaning the time window within which the triggering condition needs to be continuously met in order to trigger the reporting event in the UE. For example, a higher 'too early handover' ratio than desired can be counter-acted by increasing the threshold, thereby delaying the triggering of A3 event. Another example could be the resolving of a higher 'handover to wrong cell' ratio than desired by increasing the threshold towards the first, unwanted, target cell.

Three main message types (i.e., RLF reports between the UE and eNBs, RLF INDICATION reports between eNBs, and HANDOVER REPORTs between eNBs) are used by MRO to communicate/gather information regarding Too Early Handover, Too Late Handover, and Handover to the wrong cell. HandOver HO failures are discussed, for example, in Section 22.4.2 of TS 36.300, V.11.4.0 (2012-12), "3rd Generation Partnership Project; Technical Specification Group Radio Access Network; Evolved Universal Terrestrial Radio Access (E-UTRA) and Evolved Universal Terrestrial Radio Access Network (E-UTRAN);Overall description; Stage 2 (Release 11), pages 1-208. Moreover, the disclosure of TS 36.300, V.11.4.0 is hereby incorporated herein in its entirety by reference.

### RLF Report

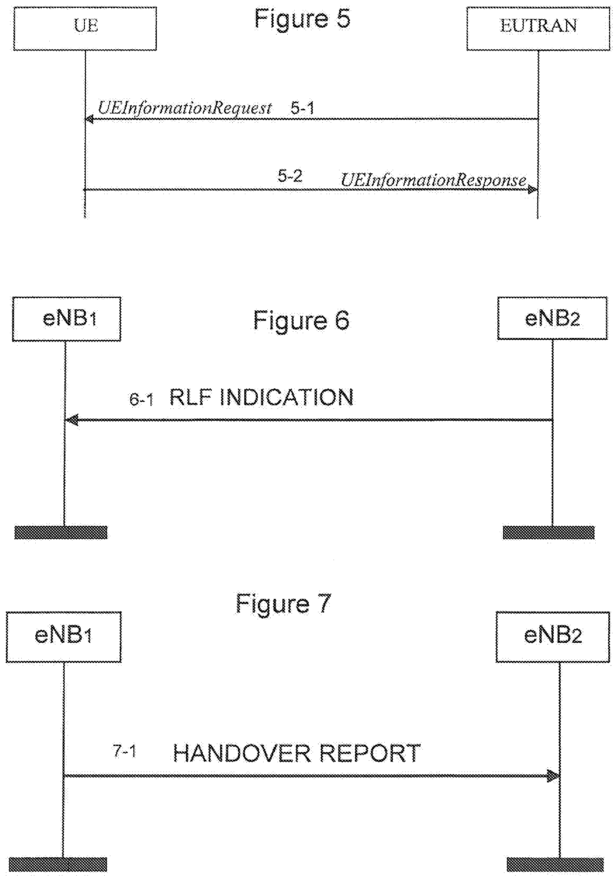

The eNB to which the UE is reconnecting to (either through a successful RRC re-establishment or via an RRCConnectionSetup after IDLE mode) can ask for more detailed information about the failure after the connection is completed. This is done via the UE Information Request procedure 5-1, where the eNB can ask for an RLF report, as shown in Figure 5, which illustrates RLF reporting via UE Information Response 5-2.

As shown in Figure 5, the UE responds by sending a UEInformationResponse message 5-2 with a detailed RLF report which can include information such as:
Measurement result of the last served cell before RLF;
Measurement result of the neighbor cells performed before RLF;
Location info, which can include last co-ordinates as well as velocity of the UE when RLF was detected;
E-CGI (E-UTRAN Global Cell ID) of the cell where RLF occurred, and if that is not available the Physical Cell ID (PCI) of the cell where RLF occurred;
E-CGI of the cell at which the re-establishment attempt was made;
If the RLF occurred after the reception of a HO command (i.e. RRCConnectionReconfiguration message including the mobilityControlInfo), The E-CGI where this message was received, and The elapsed time since the reception of this message;
The RLF type (i.e., whether it is a normal radio link failure or a handover failure);
The RLF cause (i.e., whether it was due to T310 expiration, random access problems, or max number of RLC retransmissions); and/or
The time elapsed since the failure occurred.

Using the information above, the eNB can deduce whether the RLF was due to incorrect HO parameters (too early, too late, HO to wrong cell), due to a coverage hole (no cell with sufficient signal strength, or insufficient uplink radio conditions), etc.

### Radio Link Failure Indication

The purpose of the Radio Link Failure Indication procedure is to transfer information regarding RRC re-establishment attempts and RRC Connection Setup attempts (following an RLF) between eNBs controlling neighboring cells. The RLF Indication signaling, as shown in Figure 6, takes place after the RLF Report from the UE is received and it goes from the eNB at which a re-establishment attempt or a connection setup is made to an eNB to which the UE concerned may have previously been attached prior to radio link failure.

eNB2 initiates the procedure by sending the RLF INDICATION message 6-1 to eNB1 following a re-establishment attempt or connection setup from a UE at eNB2, when eNB2 considers that the UE may have previously been served by a cell controlled by eNB1. Some of the Information Elements (IEs) included in the RLF INDICATION message are listed as follows:
Failure Cell ID: PCI of the cell in which the UE was connected prior to the failure occurred;
Reestablishment Cell ID: E-CGI of the cell where RL re-establishment attempt is made;
UE Identity: C-RNTI and MAC ID of the UE in the failure cell;
RLF report: eNB2 may include the UE RLF Report that it might have received via UE Information Request, which may be used by the eNB 1 to determine the nature of the failure.
RLF indication is used to communicate Too Late handovers or handovers to wrong cells.

### Handover Report

If an eNB receives an RLF INDICATION message from a neighbor eNB, and if the receiving eNB finds out that it has sent a UE CONTEXT RELEASE message towards that neighbor eNB within the last Tstore_UE_cntxt seconds (i.e., meaning that very recently the concerned UE was handed over properly to it from the same eNB), the receiving eNB responds by sending a HANDOVER REPORT message 7-1 that indicates Too Early Handover, as shown in Figure 7.

If an eNB receives an RLF INDICATION message from a neighbor eNB, and if the receiving eNB finds out that it has sent a UE CONTEXT RELEASE message towards another neighbor eNB within the last Tstore_UE_cntxt seconds (i.e. meaning that very recently the concerned UE was handed over properly to it from another eNB), the eNB responds by sending a HANDOVER REPORT message to the other eNB that indicates Handover to the Wrong Cell.

Some of the IEs (Information Elements) included in the HANDOVER REPORT are listed as follows:
Type of detected handover problem (Too Early Handover, Handover to Wrong Cell); E-CGI of source and target cells in the handover;
E-CGI of the re-establishment cell (in the case of Handover to Wrong Cell);
Handover cause (signaled by the source during handover preparation); and/or
RLF report wherein eNB 1 may include the UE RLF Report that it might have received via RLF INDICATION, which may be used by the eNB2 to determine the nature of the failure.

### Mobility Load Balancing

As specified in 3GPP TS 36.300 version 11.4.0, entitled "E-UTRAN overall description," the objective of load balancing is to distribute cell load evenly among cells and/or to transfer part of the traffic from congested cells. This may be performed using self-optimization of mobility parameters and/or handover actions.

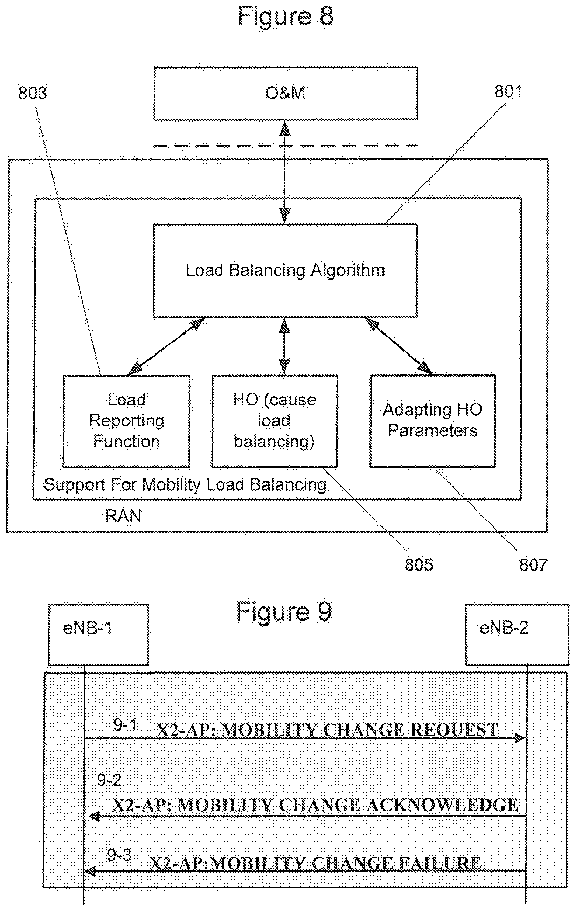

Self-optimization/improvement of the intra-LTE and inter-RAT mobility parameters to the current load in the cell and in the adjacent cells can improve system capacity compared to static/non-optimized cell reselection/handover parameters. Such optimization/improvement can also reduce/minimize human intervention in the network management and optimization/improvement tasks. Support for mobility load balancing 801 may include one or more of following functions:
Load reporting 803;
Load balancing 805 action based on handovers; and/or
Adapting handover 807 and/or reselection configuration.
Triggering of each of these functions is optional and may depend on implementation. A functional architecture of SON (Self Optimized Network) load balancing is presented in Figure 8.

A procedure used to induce load balancing via mobility is the Mobility Settings Change, which is used to report and suggest changes of the parameters used to trigger mobility between two nodes. A mobility setting change procedure is illustrated in Figure 9 where an X2-AP Mobility Change Request is transmitted 9-1 from eNB-1 to eNB-2, an X2-AP Mobility Change Acknowledge is transmitted 9-2 from eNB-2 to eNB-1, and an X2-AP Mobility Change Failure is transmitted 9-3 from eNB-2 to eNB-1.

### Network Management

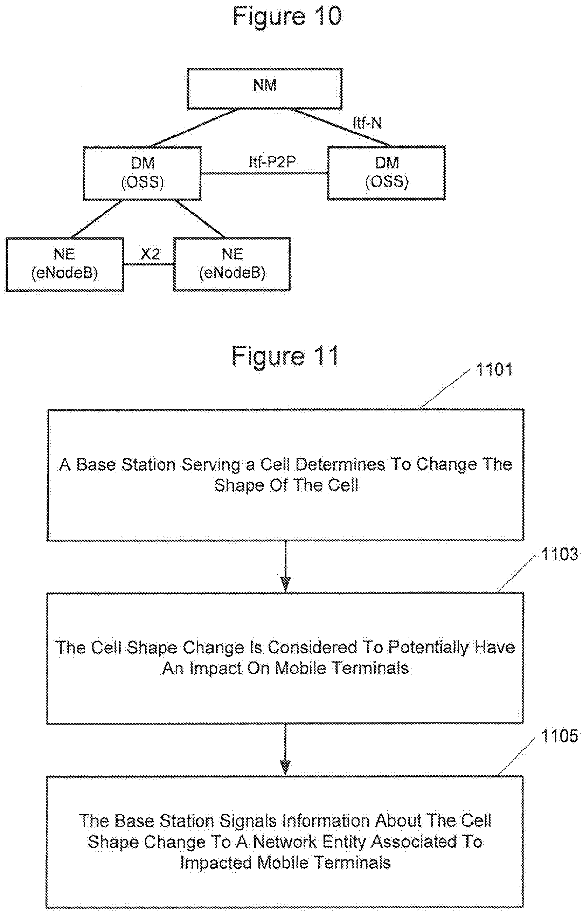

An example of a management system is shown in Figure 10. The node elements or NEs (also referred to as eNodeBs or eNBs) are managed by a domain manager or DM (also referred to as the Operation and Support System or OSS). A DM is sometimes seen as comprising an element manager (EM). Sometimes, the EM is considered to be embedded in the NE. A DM may further be managed by a network manager (NM). An interface between two NEs may be provided using an X2 interface, whereas an interface between two DMs is referred to as an Itf-P2P interface. According to embodiments disclosed herein, it is further assumed that any function that automatically optimizes/improves NE parameters can in principle execute in the NE(s), DM(s), and/or the NM(s).

### Active or Adaptive or Reconfigurable Antenna Systems

Antenna systems in mobile communications may be based on a combination of one or more antenna elements. The antenna elements of the system can be combined in different ways (e.g., using different amplitudes, delays/phases, frequencies, etc.) to focus the antenna transmission and reception with directivity. The antenna system can transmit and receive more energy in some directions than in others. By reconfiguring/adapting the combination of antenna elements, the antenna system can be adapted to change directivity over time. This means that it is possible to change the cell shape from one cell shape to another at a specific time, where cell shape reflects the area in which the cell associated with the antenna system is providing services. An antenna system, for example, can include an array of antenna elements supporting transmission to and reception from a cell (also referred to as a sector), and a base station may include three such antenna systems supporting communications over three 120 degree cells/sectors. A cell is further associated with a radio access technology and a frequency carrier for downlink communication and a frequency carrier for uplink communication. The uplink and downlink frequency carriers can be different as in frequency division duplex (FDD) or the same as in time division duplex (TDD). The antenna system can provide service to multiple cells covering a similar sector area. In other nomenclatures, this could also be considered as different antenna systems, with a one to one mapping between the cell and the antenna system. Even though one antenna system is associated with multiple cells covering a similar sector area, it can still be configured differently for different cells, also possibly differently for uplink and downlink operations.

In general, an antenna system can be used to realize/provide/service one or more cells, and AAS operation also can include splitting and merging of cells. AAS operation can be managed by the associated base station, or by a different network or management node. For example, one antenna system for a 120 degree cell/sector may be configured to adaptively split the cell/sector (having one cell/sector identification) into two or more smaller cells/sectors (each having respective different identifications), to merge two smaller cells/sectors into one larger cell/sector, to change a shape/size/range of the cell(s)/sector(s), etc. AAS is sometimes denoted adaptive antenna systems or reconfigurable antenna systems (RAS) or antenna arrays or group antennas. As used herein, AAS denotes an antenna system that can be reconfigured/adapted while in operation as well as when not in operation.

Procedures to optimize/improve mobility robustness, load balancing, coverage, and/or capacity have generally been designed on the basis of semi-static deployment scenarios. Namely, scenarios considered may not change dynamically, but rather may be stable until the optimization function decides to apply a corrective measure, for example, to change mobility parameters and/or cell coverage.

With the adoption of dynamic AAS based solutions it may be possible that the cell deployment topology changes in a dynamic manner. In the event of cell splitting or merging for capacity optimization/improvement, for example, a dynamic decision could be made to split one cell into two to increase overall capacity. Such a change may need to be coordinated with other functions like MRO and/or MLB. As discussed in R3-130074, 3GPP TSG-RAN WG3 Meeting #79, "Detailed scope for the Rel.12 SON study item," Malta, Jan. 28 to Feb. 1, 2013, dynamic configuration changes introduced by AAS may be incompatible with current SON applications.

WO 2012/158959 discloses methods and apparatus for changing cell range coverage. A network may increase regional system capacity by coordinating antenna tilting pattern among neighbor coverage/cells to obtain maximum inter-cell-interference reduction advantage in the coverage region. The network may maintain a list of cells that support large tilt subframe (LTS) and small tilt subframe (STS) and/or the respective configured pattern using e.g.an X2AP load indication message. WO2012/152306 A1 discloses an Adaptive Antenna Systems (AAS) comprised by a base station. Additionally, discloses a LTE communication system incorporating self-organising network (SON) capabilities. Further, discloses a centralized approach, wherein a central network entity optimizes coverage and capacity by providing the eNBs with optimized antennas parameters. Additionally, discloses an hybrid approach, wherein some decision-making takes place in base stations so that optimisation is carried out based on information local to a base station or information exchanged between base stations over the X2 interface, and information provided to the network management system (NMS).

### SUMMARY

According to some aspects of inventive concepts, a method of operating a first base station in a radio access network including a plurality of base stations may be provided wherein the first base station includes an active antenna system. The method includes communicating a cell configuration change indicator between the first base station and a second base station of the radio access network. The cell configuration indicator includes one of a plurality of cell configuration indices, and each of the plurality of cell configuration indices may indicate a different configuration of a cell or cells defined by the active antenna system.

In addition, a cell defined by the active antenna system may be changed, and communicating the cell configuration change indicator may include transmitting the cell configuration change indicator from the first base station to the second base station responsive to changing the cell defined by the active antenna system. For example, changing the cell defined by the active antenna system may include: splitting a first cell into second and third cells smaller than the first cell; merging first and second cells into a third cell defined by the active antenna system (with the third cell being larger than the first and second cells); changing a size and/or range of the cell defined by the active antenna system; disabling the cell defined by the active antenna system; or enabling the cell defined by the active antenna system. The cell configuration change indicator may include an identification of the cell defined by the active antenna system.

Communicating the cell configuration change indicator may include transmitting the cell configuration change indicator from the first base station to the second base station responsive to receiving a Radio Link Failure (RLF) Report at the first base station from a wireless terminal, or responsive to receiving a Radio Link Failure Indication message from a third base station.

Communicating the cell configuration change indicator may include communicating the cell configuration change indicator as: an Information Element (IE) of a Radio Link Failure (RLF) Indication message; an Information Element (IE) of a Handover Report message; an Information Element (IE) of a Mobility Change Request message; or an Information Element (IE) of a Configuration Update message.

According to other aspects of inventive concepts, a first base station may be provided for use in a radio access network including a plurality of base stations, and the first base station may include an active antenna system having a plurality of antenna elements. Moreover, the first base station may be adapted to communicate a cell configuration change indicator between the first base station and a second base station, and the cell configuration indicator includes one of a plurality of cell configuration indices. Moreover, each of the plurality of cell configuration indices indicate a different configuration of a cell or cells defined by the active antenna system of the first base station.

The first base station may be further adapted to change a cell defined by the active antenna system, and to communicate the cell configuration change indicator by transmitting the cell configuration change indicator to the second base station responsive to changing the cell defined by the active antenna system. The first base station may be configured to change the cell defined by the active antenna system by: splitting a first cell into second and third cells smaller than the first cell; merging first and second cells into a third cell defined by the active antenna system (with the third cell being larger than the first and second cells); changing a size and/or range of the cell defined by the active antenna system; disabling the cell defined by the active antenna system; or enabling the cell defined by the active antenna system. The cell configuration change indicator may include an identification of the cell defined by the active antenna system.

By providing cell configuration change indicators according to some embodiments of inventive concepts, traffic handling may be improved in wireless networks supporting dynamic/adaptive antenna configurations for cells. For example, a base station may be better able to serve wireless terminals affected by antenna reconfigurations of neighbor base stations. Moreover, mechanisms may be provided to improve mobility failure detection, mobility load balancing, and/or radio access network configuration during AAS operations such as cell shaping, cell splitting, and/or cell merging.

### BRIEF DESCRIPTION OF THE DRAWINGS

Figure 1 provides a schematic diagram illustrating elements of a radio access network according to an LTE architecture;
Figures 2A and 2B provide a message diagram illustrating handover operations according to an LTE architecture;
Figure 3 provides a message diagram illustrating ping-pong handover (also referred to as handover oscillation);
Figure 4 provides a message diagram illustrating operations of Radio Resource Control Connection Reestablishment;
Figure 5 provides a message diagram illustrating information request/response communications;
Figure 6 provides a message diagram illustrating Radio Link Failure indication signaling;
Figure 7 provides a message diagram illustrating handover report messaging to indicate too early handover;
Figure 8 provides a block diagram illustrating an architecture of Self Optimized Network load balancing;
Figure 9 provides a message diagram illustrating mobility setting change procedures;
Figure 10 provides a block diagram illustrating a mobile communication management system;
Figure 11 provides a flow chart illustrating operations providing cell shape change notification according to some embodiments disclosed herein;
Figure 12 provides a message diagram illustrating cell splitting adaptive antenna system reconfiguration using an RLF Indication message according to some embodiments disclosed herein;
Figure 13 provides a message diagram illustrating addition of an Information Element to a RLF Indication message and to a Handover Report message according to some embodiments disclosed herein;
Figures 14A and 14B provide a table illustrating addition of a Cell Configuration Change Indicator to an X2 RLF Indication message according to some embodiments disclosed herein;
Figures 15A and 15B provide a table illustrating addition of a addition of a Cell Configuration Change Indicator to an X2 RLF Handover Report message according to some embodiments disclosed herein;
Figure 16 provides a message diagram illustrating cell expansion/contraction adaptive antenna system reconfiguration using an mobility change request message according to some embodiments disclosed herein;
Figure 17 provides a table illustrating modification of a mobility change request message according to some embodiments disclosed herein;
Figures 18A, 18B, and 18C provide a table illustrating modification of an eNB configuration update message according to some embodiments disclosed herein; and
Figure 19 provides a block diagram illustrating a base station according to some embodiments disclosed herein.

### DETAILED DESCRIPTION

According to some embodiments disclosed herein, coordination of AAS operations with other SON functions may be provided. For example, embodiments disclosed herein may provide cell shape change notification signaling in a mobile communication system. Operations of embodiments disclosed herein are illustrated in Figure 11. As shown in Figure 11, a base station serving a cell may determine to change a shape of the cell at block 1101. At block 1103, the cell shape change may be considered as having potential impact on one or more mobile terminals. At block 1105, the base station may signal information about the cell shape change to a network entity associated with the potentially impacted mobile terminals.

Moreover, embodiments disclosed herein may provide mechanisms to improve/optimize mobility failure detection, mobility load balancing, and/or radio access network configuration during AAS operations such as cell shaping, cell splitting, and/or cell merging.

Embodiments disclosed herein may provide mechanisms whereby AAS modifications of cell shapes are used to modify or initiate modification of mobility policies applied to mobile terminals transiting in the areas affected by the AAS changes. In this context, AAS modifications of cell shapes may include cell shape changes of one or more cells, splitting of a cell into two or more cells (or splitting of multiple cells), and/or merging of two or more cells into one cell (or merging into multiple cells), etc.

First embodiments may include handling the case of AAS operation coordination with Mobility Robustness Optimization (MRO). In this case, a UE in mobility between cells is considered and the case of mobility failure due to cell configuration changes via AAS during the handover procedure is assumed. According to first embodiments, an information element indicating that an AAS change in configuration occurred at the target node may be added to the signaling message reporting the failure event to the node where failure occurred. For example, the extra information element may be added to the RLF Indication procedure and to the Handover Report procedure over the X2 interface.

Second embodiments may consider the case of load balancing optimization/improvement during AAS operations. According to second embodiments, a new information element providing an indicator flagging the occurrence of an AAS adjustment may be added to the signaling messages indicating a change of mobility settings for load balancing reasons. For example, the extra information element may be added to the Mobility Settings Change procedures over the X2 interface.

Third embodiments may apply where the option of cell merging and splitting is achieved via two different configurations, whose activation is signaled between nodes either via existing information like the Deactivation Information IE in eNB Configuration Update procedure over X2 or via addition of information in other existing or new messages informing a neighbor node of a change in cell configuration.

According to first embodiments, the case of a UE being handed over from a source cell to a target cell is considered. These embodiments may apply when a re-configuration via active antenna adaptation is applied during the mobility procedure. For example, a cell configuration change could be applied after the handover preparation is completed (i.e., after signaling messages such as X2: HANDOVER REQUEST and X2: HANDOVER REQUEST ACKNOWLEDGEMENT are exchanged for handover of the UE to a given target cell).

In this situation, the UE will receive a handover command (see message 2-7 of Figure 2A) for a target cell that has in the meantime changed its configuration. For example, the target cell could have been split, merged, or changed in shape.

If MRO operations are used as currently specified, the UE will send an RLF Report via RRC signaling to the re-establishment eNB. The re-establishment eNB will then send an X2: RLF INDICATION message to the node where the failure occurred. This node may trigger a HANODVER REPORT if it is considered that the node in need of adjusting mobility parameters is the one previously serving the UE. Nevertheless, it would be a mistake for the eNBs involved in the failure detection and corrective measure procedures to consider this failure event like a failure event that occurred before the AAS change was applied. In other words, the eNBs involved in MRO operations should know that the failure is related to a change of cell configuration to better diagnose the failure cause and to apply corrective measures towards the new configuration.

According to first embodiments, a new IE (information element) may be added in messages indicating the occurrence of a failure. In the case of LTE, for example, the new information element may be added to the RLF INDICATION and/or to the HANDOVER REPORT.

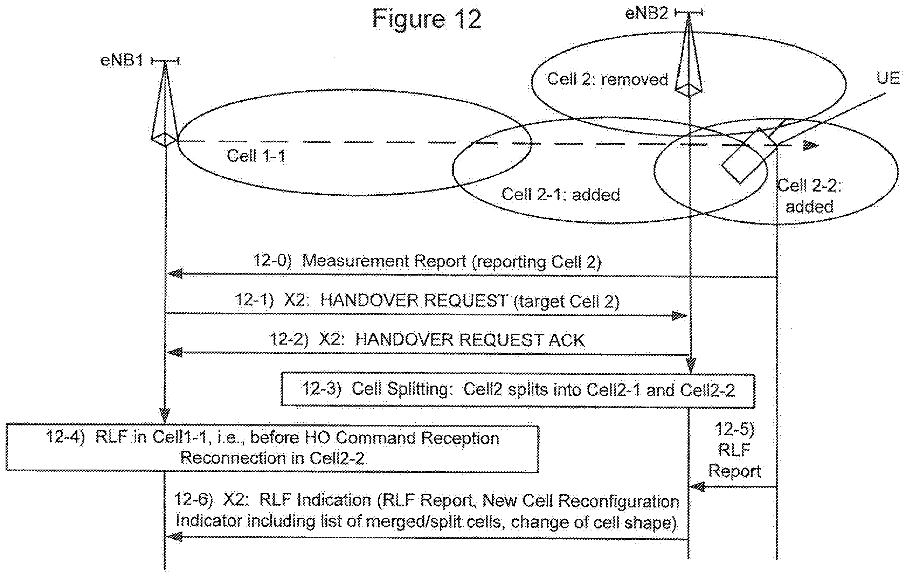

An example of first embodiments for LTE where the AAS reconfiguration consists of cell splitting is shown in Figure 12 where new parameters are added to the RLF INDICATION message. Note that the AAS reconfiguration could have been different. For example, the AAS reconfiguration could have included a change in cell shape without any splitting or merging. In one example, a change of cell shape may have created a coverage hole, and this coverage hole may need to be associated to the cell shape change, rather than a consequence of incorrect handover parameter settings.

According to some embodiments illustrated in Figure 12, base station eNB1 may initially provide service for wireless terminal UE from cell 1-1, but wireless terminal UE may move (indicated by the dashed line) into cell 2 of base station eNB2. Wireless terminal UE may transmit measurement report 12-0 to base station eNB2 reporting cell 2 for a target for potential handover. Base station eNB1 may transmit an X2 Handover Request 12-1 to base station eNB2, and base station eNB2 may respond with an X2 Handover Request Acknowledge 12-2. After the X2 Handover Request Acknowledge, base station eNB2 may split 12-3 cell 2 into smaller cells 2-1 and 2-2 so that a radio link failure RLF occurs 12-4 in cell 1-1 before Handover command reception reconnection in cell 2. Wireless terminal UE may thus transmit 12-5 a radio link failure RLF report to base station eNB2. Responsive to receiving the RLF report, base station eNB2 may transmit 12-6 an X2 RLF indication to base station eNB1 providing a cell configuration change indicator. In embodiments of Figure 12, cell splitting may be initiated independent of a handover, but cell splitting may impact a handover if the handover is in progress when cell splitting occurs.

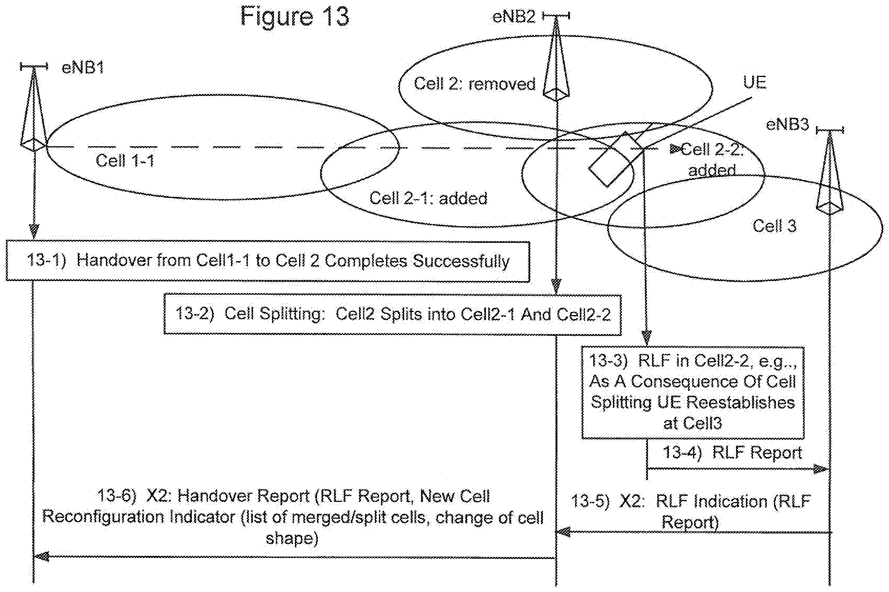

Another example is where the AAS configuration change is applied shortly after the handover from source eNB to target eNB is completed. Such a change might result in an unstable radio condition for the UE, which may cause a radio link failure and reconnection at a third cell and/or eNB. Current MRO mechanisms may imply that an X2: HANDOVER REPORT message is triggered in order to change the target eNB of the very first handover possibly to the final re-establishment cell or to modify mobility parameters under the possible assumption that the handover was triggered too early and therefore resulted in an unstable condition for the UE at the target cell. However, the first source eNB should know that the failure is due to a change of cell configuration to determine which cell is the best target. Figure 13 shows an example of how new parameters could be added to the HANDOVER REPORT message in cases of such failures.

Figure 13 is an example of the addition of new parameters (in a new Information Element or IE) in an RLF Indication message and in a Handover Report message. According to some embodiments illustrated in Figure 13, base station eNB1 may initially provide service for wireless terminal UE from cell 1-1, but wireless terminal UE may move (indicated by the dashed line) into cell 2 of base station eNB2. A handover from cell 1-1 to cell 2 may complete successfully 13-1, and base station eNB2 may split 13-2 cell 2 into smaller cells 2-1 and 2-2. As a consequence of the cell splitting, a radio link failure may occur 13-3 for wireless terminal in cell 2-2, and wireless terminal UE may reestablish at cell 3 of base station eNB3. Accordingly, wireless terminal UE may transmit 13-4 a radio link failure report to base station eNB3, and base station eNB3 may transmit 13-5 an X2 radio link failure indication (RLF Report) to base station eNB2. In response to the RLF indication message, base station eNB2 may transmit 13-6 an X2 Handover Report providing a cell configuration change indicator.

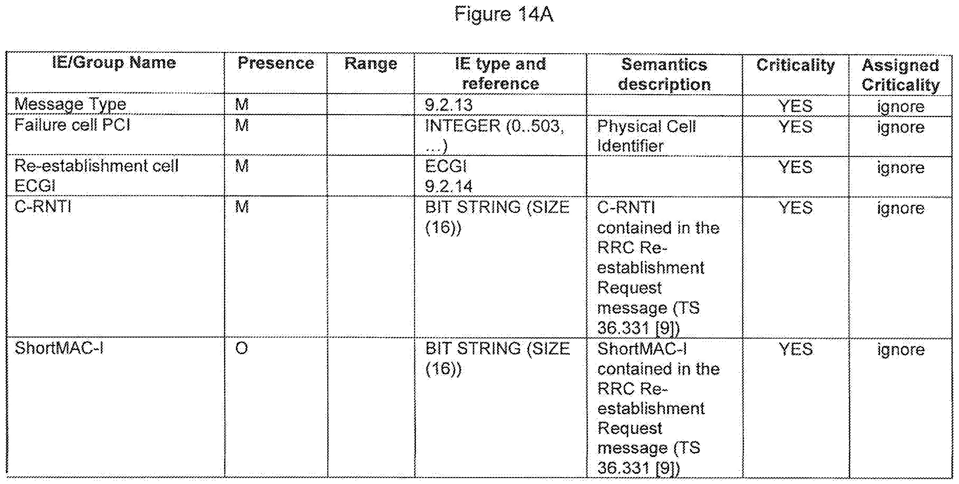

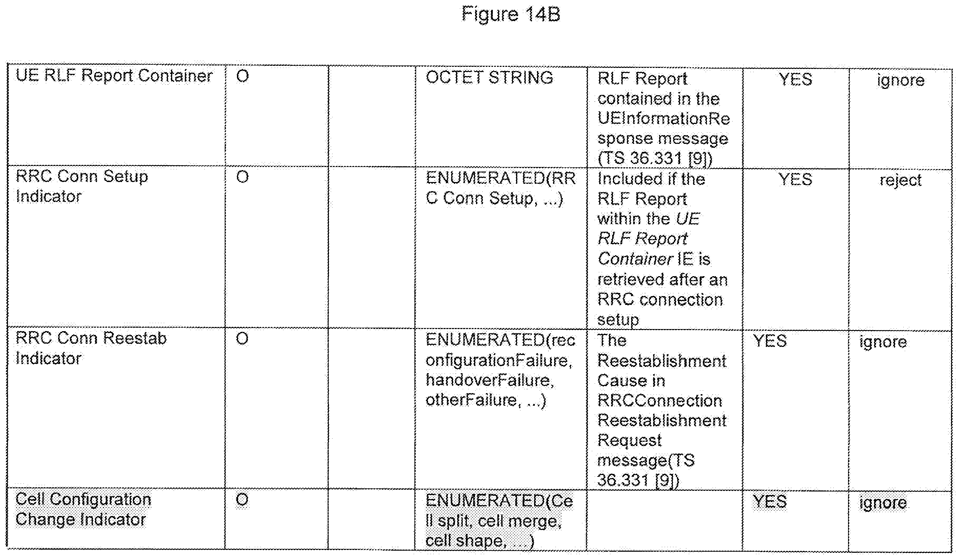

Figures 14A and 14B provide an example of how a Cell Configuration Change Indicator IE (Information Elements) can be added to an X2 RLF INDICATION message according to some embodiments.

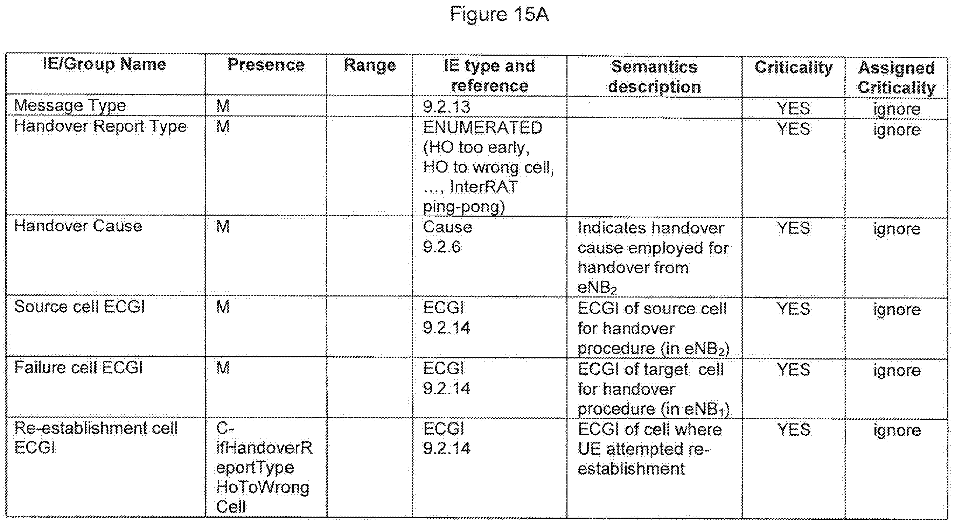

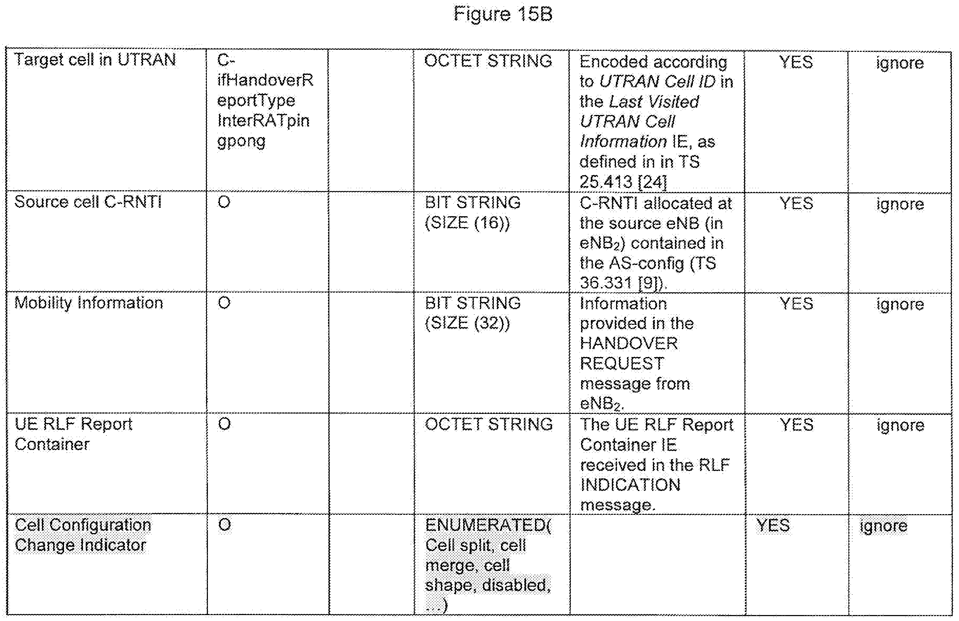

Figures 15A and 15B provide an example of how a Cell Configuration Change Indicator IE (Information Elements) can be added to an X2 RLF HANDOVER REPORT message according to some embodiments.

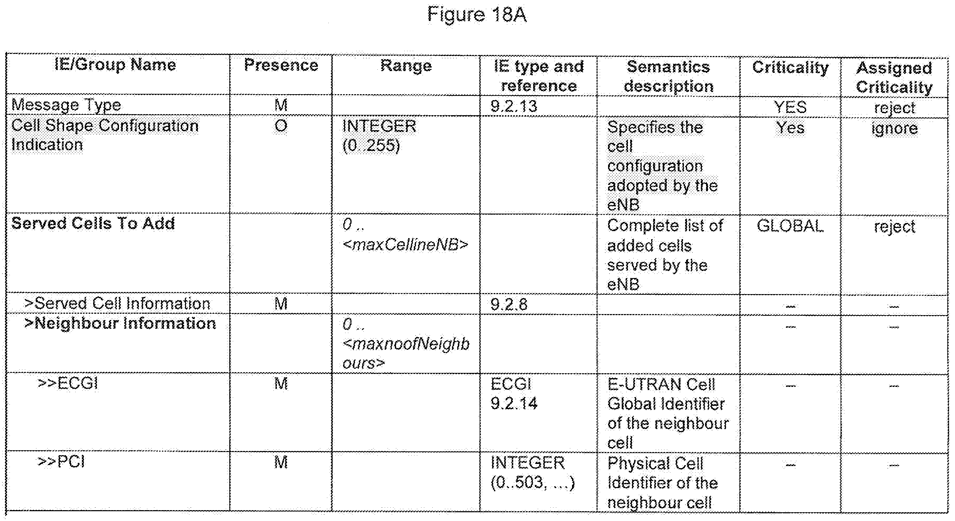

In Figures 14A, 14B, 15A, and 15B, the example values assumed by the new Cell Configuration Change Indicator IE may be used in general to indicate:
Occurrence of cell split (Cell Split);
Occurrence of cell merge (Cell Merge);
Occurrence of cell shape changes (Cell Shape); and/or
Reverting the changes to a previous configuration (Disabled).
The Cell Configuration Change Indicator IE may be implemented using other formats than the format illustrated above. As one further example, the same format as used for the Cell Shape Configuration IE in Fig. 18A may be used.

In second embodiments, the indication of a cell configuration change is added to messages indicating changes of mobility parameters or to requests for mobility parameters changes in a neighbor node or both.

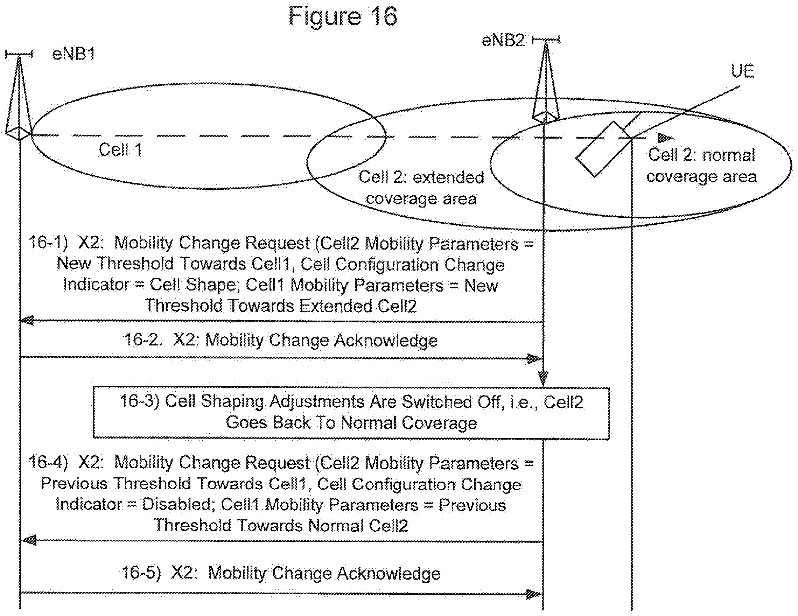

An example of why this may be useful is to achieve load balancing via handover of UEs from a loaded cell to a different neighbor cell. The latter may require a change in the mobility parameters in the serving cell and a consequent change of mobility parameters in the target neighbor cell (for mobility towards source cell). Figure 16 illustrates an example of how a cell configuration change indicator can be used to indicate mobility parameter changes.

In Figure 16, eNB2 applies a cell configuration change in the form of cell expansion. More generally, this change could have been any change in cell shape. As a consequence of such cell expansion, eNB2 may need to set new mobility thresholds towards the neighbor cell Cell1. Consequently Cell1 may need to adopt new threshold parameters towards the re-shaped neighbor Cell 2. However, it may be beneficial not to lose the previous mobility parameters configuration relative to the normal (i.e., non-extended) coverage of Cell2. For this reason, eNB2 may add an indicator to the message to signal a change of mobility parameters. Such an indicator may indicate whether the newly signaled mobility parameters are relative to a new cell configuration. Eventually, the type of configuration can be described using the values of the new IE introduced.

Once the new cell configuration is removed and Cell 2 goes back to its original coverage, a new message can be sent from eNB2 to eNB1, with the new message indicating that the cell change is disabled. In this case the neighbor eNB1 may recover parameters stored for the previous (normal) Cell 2 configuration. Alternatively, eNB1 may receive recommended mobility parameters from eNB2 for the normal cell configuration and it may accept them as the new operational parameters. Figure 16 illustrates an example of how the new Cell Configuration Change Indicator IE can be added to the MOBILITY CHANGE REQUEST message over the X2 interface. eNB2 may thus change its cell configuration independent of handovers to/from eNB1, but any handovers that are in progress during a cell configuration change may be impacted.

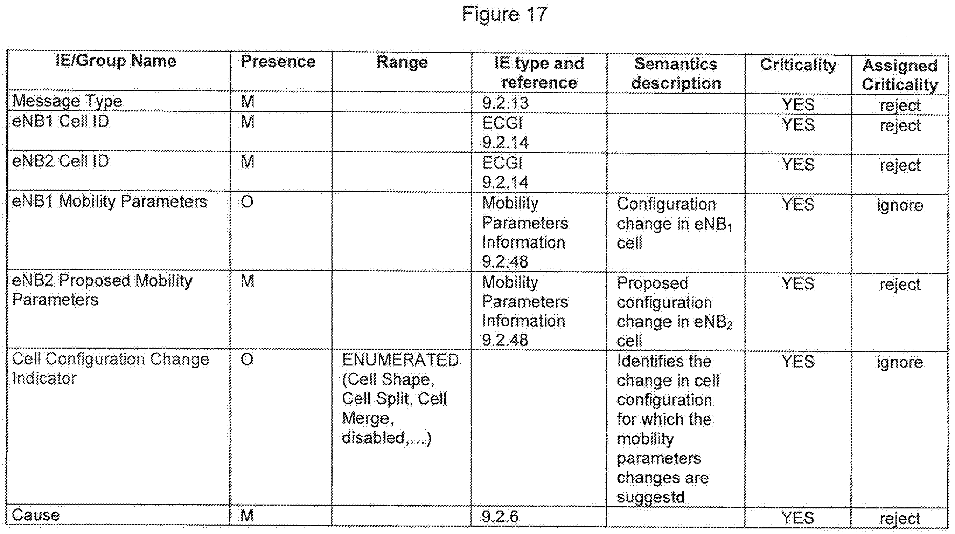

According to embodiments illustrated in Figure 16, a base station may use a mobility change request as a cell configuration change indictor. Base station eNB2 may provide service over cell 2 having a normal coverage area or an extended coverage area. Upon changing service to the extended coverage area for cell 2, base station eNB2 may transmit 16-1 an X2 mobility change request as a cell configuration change indicator to base station eNB1, and base station eNB1 may respond by transmitting 16-2 an X2 mobility change acknowledge. Base station eNB2 may then switch off 16-3 cell shaping adjustments so that cell 2 reverts to the normal coverage area. Upon changing service back to the normal coverage area for cell 2, base station eNB2 may transmit 16-4 an X2 mobility change request as a cell configuration change indicator to base station eNB1, and base station eNB1 may respond by transmitting 16-5 a mobility change acknowledge. An example of how the Mobility Change Request message may be changed to include a cell configuration change indicator is illustrated in Figure 17.

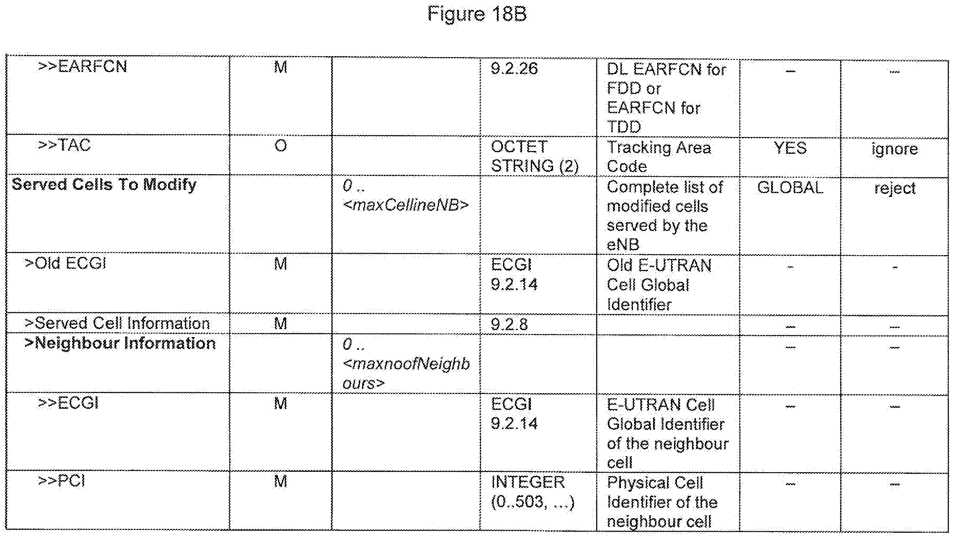

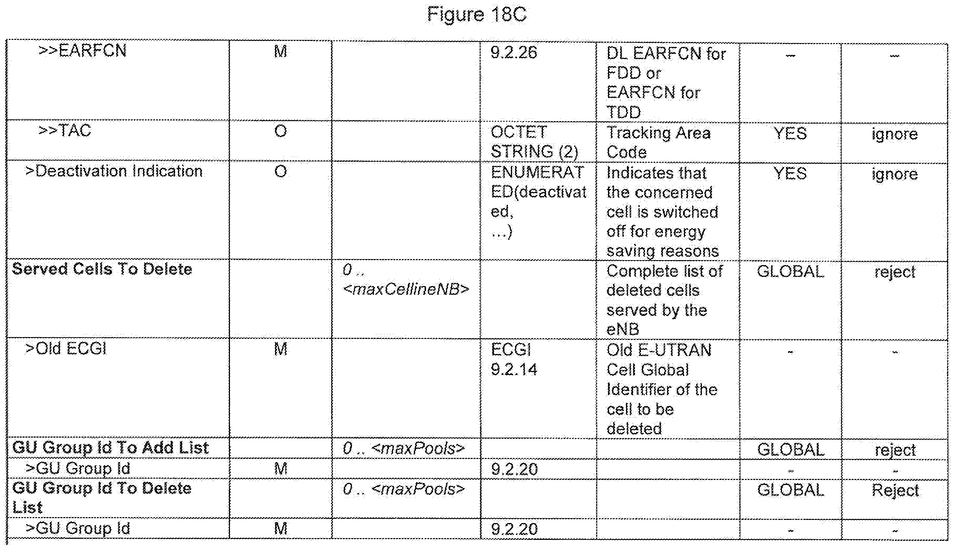

According to third embodiments, a base station (eNB) can consider multiple cell shape or cell split or cell merge or in general cell configuration alternatives, and this can be communicated to neighboring base stations using a Cell Shape Configuration Indication IE. In some embodiments, this indication IE provides an enumerable index/indication (e.g., 0 to maximum number of configurations minus 1, or 1 to maximum number of configurations), and a neighboring base station can use this information (by interpreting the index/indication) to consider different mobility parameters settings for each indicator value. The cell shape indication also can be used to describe the use of more complex configurations. Examples of complex configurations include splitting a cell A is split into cells A1 and A2, each with individual physical cell identifiers. The complex configurations can be signaled separately, and associated to a specific cell shape configuration value. Accordingly, the base station may only need to signal the configuration value/index. As an example, the Cell Shape Configuration Indication IE can be signaled as part of the X2 SETUP REQUEST and X2 SETUP RESPONSE messages or X2: eNB CONFIGURATION UPDATE message. An example of how the eNB CONFIGURATION UPDATE message can be modified to include a Cell Shape Configuration Indication according to third embodiments is illustrated in Figures 18A, 18B, and 18C. Different mobility parameters may thus be applied once the configuration index has been signaled. Moreover, by communicating a cell configuration change indicator as an Information Element (IE) of a Configuration Update message or a Mobility Change Request message, preventative/proactive action may be taken at a neighbor base station (as opposed to reactive action responsive to a configuration change indicator provided as an IE of a RLF Indication message or a Handover Report message).

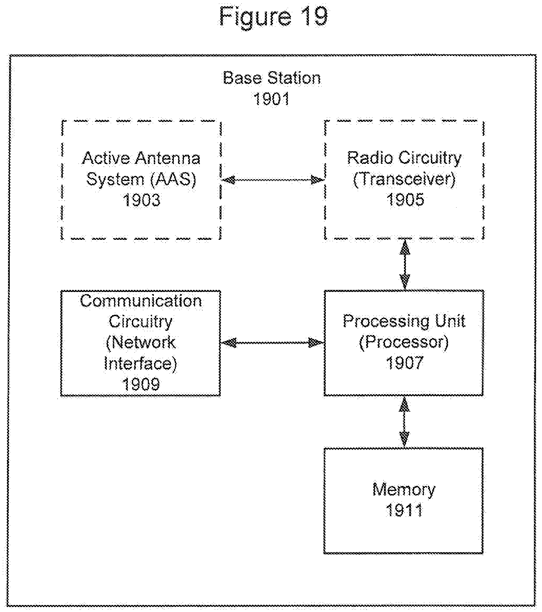

Figure 19 illustrates an Apparatus according to some embodiments disclosed herein. Embodiments disclosed herein, for example, may be realized in a network node apparatus (e.g., a base station, eNB, etc.) as illustrated in Figure 19. According to operations of embodiments disclose herein, the apparatus may be a network node arranged with communication circuitry 1909 to communicate with other network nodes (also referred to as a network interface), radio circuitry 1905 (also referred to as a transceiver) to communicate with mobile terminals via an active antenna system AAS 1903, memory 1911 to store information related to embodiments/operations disclosed herein, and a processing unit 1907 (also referred to as a processor). According to some embodiments, the processing unit 1907 (processor) is coupled to the communications circuitry 1909 (network interface), the radio circuitry 1905 (transceiver), and the memory 1911, and the radio circuitry 1905 (transceiver) is coupled to the active antenna system 1903.

The processing unit is arranged to control the radio circuitry and/or active antenna system to change a cell shape, for example, based on information obtained from the radio and/or communication circuitries, or based on control commands from another network node obtained from the communication circuitry.

In some embodiments, the processing unit has controlled the active antenna system to change a cell shape at one time instant, received via the radio circuitry a re-establishment message from a mobile terminal at a later time instant, and signaled via the communication circuitry (e.g., over an X2 interface) an indication to another network node that a previous radio link failure of the mobile terminal shall be associated to the change of cell shape. The cell shape change may be a change of the cell shape of one cell, a split of one cell into two or more cells, and/or a merge of two or more cells into one cell.

In other embodiments, the processing unit has controlled the active antenna system to change a cell shape at one time instant, received via the communication circuitry (e.g., over an X2 interface) a radio link failure indication from another network node at a later time instant, and will transmit via the communication circuitry a radio link failure indication or a handover report (e.g., over an X2 interface) to yet another network node including an indication that a previous handover or radio link failure of the mobile terminal shall be associated to the change of cell shape.

In yet other embodiments, the processing unit has controlled the active antenna system to change a cell shape at one time instant, and signals a cell configuration change indicator through communications circuitry (e.g., over an X2 interface) to another network node to inform that the handover parameters of the other network node may need to be changed.

In still other embodiments, the active antenna system is configured with a set of different cell shape configurations, each associated with an identifier. When the processing unit controls the active antenna system to change configuration it uses an associated identifier to describe the change in messages to other network nodes as described above.

Dynamic and adaptive antenna configurations for entire cells may thus have the potential to better handle traffic in wireless networks. Advantages of signaling embodiments disclosed herein may include that neighboring base stations serving users affected by the antenna reconfigurations can understand that issues detected should be associated to antenna reconfigurations and not to bad configurations of other mechanisms.

In Figure 19, the AAS and the Radio Circuitry are shown with dashed lines to illustrate different embodiments. For example, the AAS and the Radio Circuitry may both be elements of the base station (so that all elements of Figure 19 are co-located at/in a same unit). The AAS and the Radio Circuitry may be elements of an entity separate from the base station, such as a radio remote unit (also known as a radio remote head) implementing antenna systems and radio components and communicating with the base station (in this case referred to as a main unit). The radio circuitry may be part of the base station while the AAS is implemented in a separate unit, communicating with the radio circuitry of the base station. As used herein, a base station may be defined to include: all elements of Figure 19 (located in a same unit or separated, for example, in a main unit and a radio remote unit); communication circuitry, processing unit, memory, and radio circuitry (with AAS provided separately/remotely); and/or communication circuitry, processing unit, and memory (with AAS and radio circuitry provided separately/remotely).

According to first embodiments of inventive concepts illustrated in Figure 19, base station 1901 may include active antenna system 1903, transceiver 1905 coupled to active antenna system 1903, network interface 1909, and processor 1907 coupled to network interface 1909 and to transceiver 1905. More particularly, processor 1907 may be configured to transmit a cell configuration change indicator through network interface 1909 from base station 1901 to another base station of a radio access network responsive to receiving a Radio Link Failure (RLF) Report through transceiver 1905 from a wireless terminal or responsive to receiving a Radio Link Failure Indication message received through network interface 1909 from a third base station.

According to second embodiments of inventive concepts illustrated in Figure 19, base station 1901 (e.g., eNB2 of Figure 12) may include active antenna system 1903, transceiver 1905 coupled to active antenna system 1903, network interface 1909, and processor 1907 coupled to network interface 1909 and to transceiver 1905. More particularly, processor 1907 may be configured to transmit a cell configuration change indicator through network interface 1909 from base station 1901 (e.g., eNB2) to another base station (e.g., eNB1 of Figure 12) of a radio access network responsive to receiving a Radio Link Failure (RLF) Report through the transceiver 1905 from a wireless terminal (e.g., UE of Figure 12).

According to the second embodiments, active antenna system 1903 may be an active antenna system including a plurality of antenna elements. Moreover, the cell configuration indicator may be one of a plurality of cell configuration indices, and each of the plurality of cell configuration indices may indicate a different configuration of a cell or cells defined by active antenna system 1903. Processor 1907 may be configured to transmit the cell configuration change indicator as an Information Element (IE) of a Radio Link Failure (RLF) Indication message, and/or processor 1907 may be configured to transmit the cell configuration change indicator as an Information Element (IE) of a Handover Report message.

According to third embodiments of inventive concepts illustrated in Figure 19, base station 1901 (e.g., eNB2 of Figure 13) may include active antenna system 1903, transceiver 1905 coupled to active antenna system 1903, network interface 1909, and processor 1907 coupled to network interface 1909 and to transceiver 1905. More particularly, processor 1907 may be configured to transmit a cell configuration change indicator through network interface 1909 from base station 1901 (e.g., eNB2 of Figure 13) to another base station (e.g., eNB1) of a radio access network responsive to receiving a Radio Link Failure Indication message through network interface (1909) from a third base station (e.g., eNB3 of Figure 13).

According to the third embodiments, active antenna system 1903 may be an active antenna system including a plurality of antenna elements, Moreover, the cell configuration indicator may be one of a plurality of cell configuration indices, and each of the plurality of cell configuration indices may indicate a different configuration of a cell or cells defined by active antenna system 1903. Processor 1907 may be configured to transmit the cell configuration change indicator as an Information Element (IE) of a Radio Link Failure (RLF) Indication message, and/or processor 1907 may be configured to transmit the cell configuration change indicator as an Information Element (IE) of a Handover Report message.

According to fourth embodiments of inventive concepts illustrated in Figure 19, base station 1901 may include active antenna system 1903 having a plurality of antenna elements, transceiver 1905 coupled to active antenna system 1903, network interface 1909, and processor 1907 coupled to network interface 1909 and to transceiver 1905. More particularly, processor 1907 may be configured to communicate a cell configuration change indicator through network interface 1909 between first base station 1901 and another base station of a radio access network. Moreover, the cell configuration indicator may include one of a plurality of cell configuration indices, and each of the plurality of cell configuration indices may indicate a different configuration of a cell or cells defined by active antenna system 1903.

According to the fourth embodiments, processor 1907 may be further configured to change a cell defined by active antenna system 1903, and to communicate the cell configuration change indicator by transmitting the cell configuration change indicator through network interface 1909 to the other base station responsive to changing the cell defined by active antenna system 1903. Processor 1907 may be configured to change the cell defined by active antenna system 1903, for example, by: splitting a first cell into second and third cells smaller than the first cell; merging first and second cells into a third cell defined by active antenna system 1903 (with the third cell being larger than the first and second cells); changing a size and/or range of the cell defined by active antenna system 1903; disabling the cell defined by active antenna system 1903; or enabling the cell defined by active antenna system 1903. The cell configuration change indicator may include an identification of the cell defined by active antenna system 1903.

According to the fourth embodiments, processor 1907 may be configured to communicate the cell configuration change indicator by transmitting the cell configuration change indicator (through transceiver 1905) from base station 1901 (e.g., eNB2 of Figure 12) to the other base station (e.g., eNB1 of Figure 12) responsive to receiving a Radio Link Failure (RLF) Report (through transceiver 1905) at base station 1901 from wireless terminal (e.g., UE of Figure 12).

According to the fourth embodiments, processor 1907 may be configured to communicate the cell configuration change indicator by transmitting the cell configuration change indicator (through transceiver 1905) from base station 1901 (e.g., eNB2 of Figure 13) to the base station (e.g., eNB1 of Figure 13) responsive to receiving a Radio Link Failure Indication message from a third base station (e.g., eNB3 of Figure 13).

According to the fourth embodiments, processor 1907 may be configured to communicate the cell configuration change indicator by communicating the cell configuration change indicator as: an Information Element (IE) of a Radio Link Failure (RLF) Indication message; an Information Element (IE) of a Handover Report message; an Information Element (IE) of a Mobility Change Request message; or an Information Element (IE) of a Configuration Update message.

### Example Embodiments

Embodiment 1. A method of operating a first base station in a radio access network including a plurality of base stations, the method comprising: communicating a cell configuration change indicator between the first base station and a second base station of the radio access network.

Embodiment 2. The method according to Embodiment 1 wherein the first base station includes an active antenna system, the method further comprising: changing a cell defined by the active antenna system, wherein communicating the cell configuration change indicator comprises transmitting the cell configuration change indicator from the first base station to the second base station responsive to changing the cell defined by the active antenna system.

Embodiment 3. The method according to Embodiment 2 wherein changing the cell defined by the active antenna system comprises splitting a first cell into a second and third cells smaller than the first cell.

Embodiment 4. The method according to Embodiment 3 wherein the cell configuration change indicator includes an identification of at least one of the second and third cells.

Embodiment 5. The method according to any one of Embodiments 3-4 wherein the cell configuration change indicator includes an identification of the first cell.

Embodiment 6. The method according to Embodiment 2 wherein changing the cell defined by the active antenna system comprises merging first and second cells into a third cell defined by the active antenna system, with the third cell being larger than the first and second cells.

Embodiment 7. The method according to Embodiment 6 wherein the cell configuration change indicator includes an identification of at least one of the first and second cells.

Embodiment 8. The method according to any one of Embodiments 6-7 wherein the cell configuration change indicator includes an identification of the third cell.

Embodiment 9. The method according to Embodiment 2 wherein changing the cell defined by the active antenna system comprises changing a size and/or range of the cell defined by the active antenna system.

Embodiment 10. The method according to Embodiment 2 wherein changing the cell defined by the active antenna system comprises disabling the cell defined by the active antenna system.

Embodiment 11. The method according to Embodiment 2 wherein changing the cell defined by the active antenna system comprises enabling the cell defined by the active antenna system.

Embodiment 12. The method according to any one of Embodiments 9-11 wherein the cell configuration change indicator includes an identification of the cell defined by the active antenna system.

Embodiment 13. The method according to any one of Embodiments 1-12 wherein the first base station includes an active antenna system, and wherein the cell configuration indicator comprises one of a plurality of cell configuration indices wherein each of the plurality of cell configuration indices indicates a different configuration of a cell or cells defined by the active antenna system.

Embodiment 14. The method according to any one of Embodiments 1-13 wherein communicating the cell configuration change indicator comprises communicating the cell configuration change indicator over an X2 interface between the first and second base stations of the radio access network.

Embodiment 15. The method according to any one of Embodiments 1-14 wherein communicating the cell configuration change indicator comprises transmitting the cell configuration change indicator from the first base station to the second base station responsive to receiving a Radio Link Failure (RLF) Report at the first base station from a wireless terminal.

Embodiment 16. The method according to any one of Embodiments 1-14 wherein communicating the cell configuration change indicator comprises transmitting the cell configuration change indicator from the first base station to the second base station responsive to receiving a Radio Link Failure Indication message from a third base station.

Embodiment 17. The method according to Embodiment 16 wherein receiving a Radio Link Failure Indication message from the third base station comprises receiving the Radio Link Failure Indication message over an X2 interface between the first and third base stations.

Embodiment 18. The method according to any one of Embodiments 1-14 wherein communicating the cell configuration change indicator comprises transmitting the cell configuration change indicator from the first base station to the second base station responsive to receiving a Radio Link Failure Indication message from a third base station.

Embodiment 19. The method according to any one of Embodiments 1-18 wherein communicating the cell configuration change indicator comprises communicating the cell configuration change indicator as an Information Element (IE) of a Radio Link Failure (RLF) Indication message. For example, the RLF Indication message may include one or more of the information elements illustrated in Figures 14A and 14B, and/or may have a format illustrated in Figures 14A and 14B.

Embodiment 20. The method according to any one of Embodiments 1-18 wherein communicating the cell configuration change indicator comprises communicating the cell configuration change indicator as an Information Element (IE) of a Handover Report message. For example, the Handover Report message may include one or more of the information elements illustrated in Figures 15A and 15B, and/or may have a format illustrated in Figures 15A and 15B.

Embodiment 21. The method according to any one of Embodiments 1-18 wherein communicating the cell configuration change indicator comprises communicating the cell configuration change indicator as an Information Element (IE) of a Mobility Change Request message. For example, the Mobility Change Request message may include one or more of the information elements illustrated in Figure 17, and/or may have a format illustrated in Figure 17.

Embodiment 22. The method according to any one of Embodiments 1-18 wherein communicating the cell configuration change indicator comprises communicating the cell configuration change indicator as an Information Element (IE) of a Configuration Update message. For example, the Configuration Update message may include one or more of the information elements illustrated in Figures 18A, 18B, and 18C, and/or may have a format illustrated in Figures 18A, 18B, and 18C.

Embodiment 23. A method of operating a first base station in a radio access network including a second base station, the method comprising: receiving a cell configuration change indicator at the first base station from the second base station of the radio access network.

Embodiment 24. The method according to Embodiment 23 wherein the cell configuration indicator comprises one of a plurality of cell configuration indices wherein each of the plurality of cell configuration indices indicates a different configuration of a cell or cells defined by an active antenna system of the second base station.

Embodiment 25. The method according to any one of Embodiments 23-24 wherein receiving the cell configuration change indicator comprises receiving the cell configuration change indicator over an X2 interface between the first and second base stations of the radio access network.

Embodiment 26. The method according to any one of Embodiments 23-25 wherein receiving the cell configuration change indicator comprises receiving the cell configuration change indicator as an Information Element (IE) of a Radio Link Failure (RLF) Indication message. For example, the RLF Indication message may include one or more of the information elements illustrated in Figures 14A and 14B, and/or may have a format illustrated in Figures 14A and 14B.

Embodiment 27. The method according to any one of Embodiments 23-25 wherein receiving the cell configuration change indicator comprises receiving the cell configuration change indicator as an Information Element (IE) of a Handover Report message. For example, the Handover Report message may include one or more of the information elements illustrated in Figures 15A and 15B, and/or may have a format illustrated in Figures 15A and 15B.

Embodiment 28. The method according to any one of Embodiments 23-25 wherein receiving the cell configuration change indicator comprises receiving the cell configuration change indicator as an Information Element (IE) of a Mobility Change Request message. For example, the Mobility Change Request message may include one or more of the information elements illustrated in Figure 17, and/or may have a format illustrated in Figure 17.

Embodiment 29. The method according to any one of Embodiments 23-25 wherein receiving the cell configuration change indicator comprises receiving the cell configuration change indicator as an Information Element (IE) of a Configuration Update message. For example, the Configuration Update message may include one or more of the information elements illustrated in Figures 18A, 18B, and 18C, and/or may have a format illustrated in Figures 18A, 18B, and 18C.

Embodiment 30. A first base station comprising: an antenna system; a transceiver coupled to the antenna system; a network interface; and a processor coupled to the network interface and the transceiver, the processor being configured to communicate a cell configuration change indicator through the network interface between the first base station and a second base station of a radio access network.

Embodiment 31. The first base station according to Embodiment 30 wherein the antenna system comprises an active antenna system including a plurality of antenna elements, wherein the processor is further configured to change a cell defined by the active antenna system, and to communicate the cell configuration change indicator by transmitting the cell configuration change indicator through the network interface to the second base station responsive to changing the cell defined by the active antenna system.

Embodiment 32. The first base station according to Embodiment 31 wherein the processor is configured to change the cell defined by the active antenna system by splitting a first cell into second and third cells smaller than the first cell.

Embodiment 33. The first base station according to Embodiment 32 wherein the cell configuration change indicator includes an identification of at least one of the second and third cells.

Embodiment 34. The first base station according to any one of Embodiments 32-33 wherein the cell configuration change indicator includes an identification of the first cell.

Embodiment 35. The first base station according to Embodiment 31 wherein the processor is configured to change the cell defined by the active antenna system by merging first and second cells into a third cell defined by the active antenna system, with the third cell being larger than the first and second cells.

Embodiment 36. The first base station according to Embodiment 35 wherein the cell configuration change indicator includes an identification of at least one of the first and second cells.

Embodiment 37. The first base station according to any one of Embodiments 35-36 wherein the cell configuration change indicator includes an identification of the third cell.

Embodiment 38. The first base station according to Embodiment 31 wherein the processor is configured to change the cell defined by the active antenna system by changing a size and/or range of the cell defined by the active antenna system.

Embodiment 39. The first base station according to Embodiment 31 wherein the processor is configured to change the cell defined by the active antenna system by disabling the cell defined by the active antenna system.

Embodiment 40. The first base station according to Embodiment 31 wherein the processor is configured to change the cell defined by the active antenna system by enabling the cell defined by the active antenna system.

Embodiment 41. The first base station according to any one of Embodiments 38-40 wherein the cell configuration change indicator includes an identification of the cell defined by the active antenna system.

Embodiment 42. The first base station according to any one of Embodiments 30-41 wherein the antenna system comprises an active antenna system including a plurality of antenna elements, wherein the cell configuration indicator comprises one of a plurality of cell configuration indices wherein each of the plurality of cell configuration indices indicates a different configuration of a cell or cells defined by the active antenna system.

Embodiment 43. The first base station according to any one of Embodiments 30-42 wherein the processor is configured to communicate the cell configuration change indicator by communicating the cell configuration change indicator through the network interface over an X2 interface between the first and second base stations of the radio access network.

Embodiment 44. The first base station according to any one of Embodiments 30-43 wherein the processor is configured to communicate the cell configuration change indicator by transmitting the cell configuration change indicator through the network interface to the second base station responsive to receiving a Radio Link Failure (RLF) Report through the transceiver from a wireless terminal.

Embodiment 45. The first base station according to any one of Embodiments 30-43 wherein the processor is configured to communicate the cell configuration change indicator by transmitting the cell configuration change indicator through the network interface to the second base station responsive to receiving a Radio Link Failure Indication message through the network interface from a third base station.

Embodiment 46. The first base station according to Embodiment 45 wherein the processor is configured to receive a Radio Link Failure Indication message from the third base station by receiving the Radio Link Failure Indication message over an X2 interface between the first and third base stations.

Embodiment 47. The first base station according to any one of Embodiments 30-43 wherein the processor is configured to communicate the cell configuration change indicator by transmitting the cell configuration change indicator through the network interface to the second base station responsive to receiving a Radio Link Failure Indication message through the network interface from a third base station.

Embodiment 48. The first base station according to any one of Embodiments 30-47 wherein the processor is configured to communicate the cell configuration change indicator as an Information Element (IE) of a Radio Link Failure (RLF) Indication message. For example, the RLF Indication message may include one or more of the information elements illustrated in Figures 14A and 14B, and/or may have a format illustrated in Figures 14A and 14B.

Embodiment 49. The first base station according to any one of Embodiments 30-47 wherein the processor is configured to communicate the cell configuration change indicator as an Information Element (IE) of a Handover Report message. For example, the Handover Report message may include one or more of the information elements illustrated in Figures 15A and 15B, and/or may have a format illustrated in Figures 15A and 15B.

Embodiment 50. The first base station according to any one of Embodiments 30-47 wherein the processor is configured to communicate the cell configuration change indicator as an Information Element (IE) of a Mobility Change Request message. For example, the Mobility Change Request message may include one or more of the information elements illustrated in Figure 17, and/or may have a format illustrated in Figure 17.

Embodiment 51. The first base station according to any one of Embodiments 30-47 wherein the processor is configured to communicate the cell configuration change indicator as an Information Element (IE) of a Configuration Update message. For example, the Configuration Update message may include one or more of the information elements illustrated in Figures 18A, 18B, and 18C, and/or may have a format illustrated in Figures 18A, 18B, and 18C.

Embodiment 52. The first base station according to any of the Embodiments 31-51 wherein the processor is configured to receive information from a network node to change a cell defined by the active antenna system, and further configured to change the cell defined by the active antenna system responsive to the received information.

Embodiment 53. The first base station according to Embodiment 52, wherein the network node is a node in a operation, administration and/or management system. The network node, for example, may be in a network management system, in an operation, administration and management system, in an element management system, in a domain management system, or in a similar system.

Embodiment 54. The first base station according to any of the Embodiments 30-53, wherein the active antenna system is physically separated from the processor, the network interface, and/or the transceiver.

Embodiment 55. The first base station according to any of the Embodiments 30-53, wherein the active antenna system and the transceiver coupled to the antenna system are physically separated from the network interface and/or the processor.

Embodiment 56. A first base station comprising: an antenna system; a transceiver coupled to the antenna system; a network interface; and a processor coupled to the network interface and the transceiver, the processor being configured to receive a cell configuration change indicator through the network interface from a second base station of the radio access network.

Embodiment 57. The first base station according to Embodiment 56 wherein the cell configuration indicator comprises one of a plurality of cell configuration indices wherein each of the plurality of cell configuration indices indicates a different configuration of a cell or cells defined by an active antenna system of the second base station.

Embodiment 58. The first base station according to any one of Embodiments 56-57 wherein the processor is configured to receive the cell configuration change indicator by receiving the cell configuration change indicator through the network interface over an X2 interface between the first and second base stations of the radio access network.

Embodiment 59. The first base station according to any one of Embodiments 56-58 wherein the processor is configured to receive the cell configuration change indicator as an Information Element (IE) of a Radio Link Failure (RLF) Indication message. For example, the RLF Indication message may include one or more of the information elements illustrated in Figures 14A and 14B, and/or may have a format illustrated in Figures 14A and 14B.

Embodiment 60. The first base station according to any one of Embodiments 56-58 wherein the processor is configured to receive the cell configuration change indicator as an Information Element (IE) of a Handover Report message. For example, the Handover Report message may include one or more of the information elements illustrated in Figures 15A and 15B, and/or may have a format illustrated in Figures 15A and 15B.

Embodiment 61. The first base station according to any one of Embodiments 56-58 wherein the processor is configured to receive the cell configuration change indicator as an Information Element (IE) of a Mobility Change Request message. For example, the Mobility Change Request message may include one or more of the information elements illustrated in Figure 17, and/or may have a format illustrated in Figure 17.

Embodiment 62. The first base station according to any one of Embodiments 56-58 wherein the processor is configured to receive the cell configuration change indicator as an Information Element (IE) of a Configuration Update message. For example, the Configuration Update message may include one or more of the information elements illustrated in Figures 18A, 18B, and 18C, and/or may have a format illustrated in Figures 18A, 18B, and 18C.

Embodiment 63. The method according to any of Embodiments 23-29 further comprising: adapting mobility procedures at the first base station responsive to the cell configuration change indicator.

Embodiment 64. The first base station according to any of Embodiments 56-62 wherein the processor is further configured to adapt mobility procedures at the first base station responsive to the cell configuration change indicator.

Embodiment 65. A first base station adapted to perform a method according to any one of Embodiments 1-29.

### Further Definitions

When an element is referred to as being "connected", "coupled", "responsive", or variants thereof to another element, it can be directly connected, coupled, or responsive to the other element or one or more intervening elements may be present. In contrast, when an element is referred to as being "directly connected", "directly coupled", "directly responsive", or variants thereof to another element, there are no intervening elements present. Like numbers refer to like nodes/elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or", abbreviated "/", includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but do not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit (also referred to as a processing unit and/or processor) of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Other network elements, communication devices and/or methods according to embodiments of inventive concepts will be or become apparent to one with skill in the art upon review of the present drawings and description. It is intended that all such additional network elements, devices, and/or methods be included within this description, be within the scope of the present inventive concepts. Moreover, it is intended that all embodiments disclosed herein can be implemented separately or combined in any way and/or combination.

## Claims

1. A method of operating a first base station in a radio access network including a plurality of base stations, wherein the first base station includes an active antenna system, the method comprising:
communicating (12-6, 13-6, 16-4) a cell configuration change indicator between the first base station and a second base station of the radio access network,
**characterized in** the cell configuration indicator comprises one of a plurality of cell configuration indices wherein each of the plurality of cell configuration indices indicates a different configuration of a cell or cells defined by the active antenna system.

2. The method according to Claim 1, the method further comprising:
changing (12-3, 16-3) a cell defined by the active antenna system, wherein communicating the cell configuration change indicator comprises transmitting the cell configuration change indicator from the first base station to the second base station responsive to changing the cell defined by the active antenna system.

3. The method according to any one of Claims 1-2 wherein communicating the cell configuration change indicator comprises transmitting (12-6) the cell configuration change indicator from the first base station to the second base station responsive to receiving a Radio Link Failure, RLF, Report at the first base station from a wireless terminal (12-5).

4. The method according to any one of Claims 1-2 wherein communicating the cell configuration change indicator comprises transmitting (13-6) the cell configuration change indicator from the first base station to the second base station responsive to receiving a Radio Link Failure Indication message from a third base station (13-5).

5. The method according to any one of Claims 1-4 wherein communicating the cell configuration change indicator comprises communicating the cell configuration change indicator as an Information Element, IE, of a Radio Link Failure, RLF, Indication message.

6. The method according to any one of Claims 1-4 wherein communicating the cell configuration change indicator comprises communicating the cell configuration change indicator as an Information Element, IE, of a Handover Report message.

7. The method according to any one of Claims 1-4 wherein communicating the cell configuration change indicator comprises communicating the cell configuration change indicator as an Information Element, IE, of a Configuration Update message.

8. A first base station for use in a radio access network including a plurality of base stations wherein the first base station comprises an active antenna system including a plurality of antenna elements, wherein the first base station is adapted to:
communicate a cell configuration change indicator between the first base station and a second base station, **characterized in** the cell configuration indicator comprises one of a plurality of cell configuration indices wherein each of the plurality of cell configuration indices indicates a different configuration of a cell or cells defined by the active antenna system of the first base station.

9. The first base station according to Claim 8, wherein the first base station is further adapted to:
change a cell defined by the active antenna system, and to communicate the cell configuration change indicator by transmitting the cell configuration change indicator to the second base station responsive to changing the cell defined by the active antenna system.

10. The first base station according to Claim 9 wherein the first base station is further adapted to:
change the cell defined by the active antenna system by splitting a first cell into second and third cells smaller than the first cell.

11. The first base station according to Claim 9 wherein the first base station is further adapted to:
change the cell defined by the active antenna system by merging first and second cells into a third cell defined by the active antenna system, with the third cell being larger than the first and second cells.

12. The first base station according to Claim 9 wherein the first base station is further adapted to:
change the cell defined by the active antenna system by changing a size and/or range of the cell defined by the active antenna system.

13. The first base station according to Claim 9 wherein the first base station is further adapted to:
change the cell defined by the active antenna system by disabling the cell defined by the active antenna system.

14. The first base station according to Claim 9 wherein the first base station is further adapted to:
change the cell defined by the active antenna system by enabling the cell defined by the active antenna system.

15. The first base station according to any one of Claims 12-14 wherein the cell configuration change indicator includes an identification of the cell defined by the active antenna system.

## Patentansprüche

1. Verfahren zum Betreiben einer ersten Basisstation in einem Funkzugangsnetzwerk, das eine Vielzahl von Basisstationen beinhaltet, wobei die erste Basisstation ein aktives Antennensystem beinhaltet, wobei das Verfahren Folgendes umfasst:
Übermitteln (12-6, 13-6, 16-4) eines Zellauslegungsänderungsindikators zwischen der ersten Basisstation und einer zweiten Basisstation des Funkzugangsnetzwerks, **dadurch gekennzeichnet, dass** der Zellauslegungsindikator einen einer Vielzahl von Zellauslegungsindices umfasst, wobei jeder der Vielzahl von Zellauslegungsindices eine andere Auslegung einer Zelle oder von Zellen anzeigt, die vom aktiven Antennensystem definiert sind.

2. Verfahren nach Anspruch 1, wobei das Verfahren ferner Folgendes umfasst:
Ändern (12-3, 16-3) einer vom aktiven Antennensystem definierten Zelle, wobei das Übermitteln des Zellauslegungsänderungsindikators das Übertragen des Zellauslegungsänderungsindikators von der ersten Basisstation zur zweiten Basisstation in Reaktion auf das Ändern der vom aktiven Antennensystem definierten Zelle umfasst.

3. Verfahren nach einem der Ansprüche 1-2, wobei das Übermitteln des Zellauslegungsänderungsindikators das Übertragen (12-6) des Zellauslegungsänderungsindikators von der ersten Basisstation zur zweiten Basisstation in Reaktion auf das Empfangen eines Berichts zu einem Funkverbindungsausfall (Radio Link Failure, RLF) an der ersten Basisstation von einem drahtlosen Endgerät (12-5) umfasst.

4. Verfahren nach einem der Ansprüche 1-2, wobei das Übermitteln des Zellauslegungsänderungsindikators das Übertragen (13-6) des Zellauslegungsänderungsindikators von der ersten Basisstation zur zweiten Basisstation in Reaktion auf das Empfangen einer Nachricht zur Anzeige eines Funkverbindungsausfalls von einer dritten Basisstation (13-5) umfasst.

5. Verfahren nach einem der Ansprüche 1-4, wobei das Übermitteln des Zellauslegungsänderungsindikators das Übermitteln des Zellauslegungsänderungsindikators als Informationselement, IE, einer Nachricht zur Anzeige eines Funkverbindungsausfalls, RLF, umfasst.

6. Verfahren nach einem der Ansprüche 1-4, wobei das Übermitteln des Zellauslegungsänderungsindikators das Übermitteln des Zellauslegungsänderungsindikators als Informationselement, IE, einer Nachricht zu einem Weiterreichungsbericht umfasst.

7. Verfahren nach einem der Ansprüche 1-4, wobei das Übermitteln des Zellauslegungsänderungsindikators das Übermitteln des Zellauslegungsänderungsindikators als Informationselement, IE, einer Nachricht zu einer Auslegungsaktualisierung umfasst.

8. Erste Basisstation zur Verwendung in einem Funkzugangsnetzwerk, das eine Vielzahl von Basisstationen beinhaltet, wobei die erste Basisstation ein aktives Antennensystem umfasst, das eine Vielzahl von Antennenelementen beinhaltet, wobei die erste Basisstation für Folgendes angepasst ist:
Übermitteln eines Zellauslegungsänderungsindikators zwischen der ersten Basisstation und einer zweiten Basisstation, **dadurch gekennzeichnet, dass** der Zellauslegungsindikator einen einer Vielzahl von Zellauslegungsindices umfasst, wobei jeder der Vielzahl von Zellauslegungsindices eine andere Auslegung einer Zelle oder von Zellen anzeigt, die vom aktiven Antennensystem der ersten Basisstation definiert sind.

9. Erste Basisstation nach Anspruch 8, wobei die erste Basisstation ferner für Folgendes angepasst ist:
Ändern einer vom aktiven Antennensystem definierten Zelle und Übermitteln des Zellauslegungsänderungsindikators durch Übertragen des Zellauslegungsänderungsindikators zur zweiten Basisstation in Reaktion auf das Ändern der vom aktiven Antennensystem definierten Zelle.

10. Erste Basisstation nach Anspruch 9, wobei die erste Basisstation ferner für Folgendes angepasst ist:
Ändern der vom aktiven Antennensystem definierten Zelle durch Teilen einer ersten Zelle in eine zweite und eine dritte Zelle, die kleiner sind als die erste Zeile.

11. Erste Basisstation nach Anspruch 9, wobei die erste Basisstation ferner für Folgendes angepasst ist:
Ändern der vom aktiven Antennensystem definierten Zelle durch Zusammenfassen der ersten und der zweiten Zelle zu einer vom aktiven Antennensystem definierten dritten Zelle, wobei die dritte Zelle größer ist als die erste und die zweite Zeile.

12. Erste Basisstation nach Anspruch 9, wobei die erste Basisstation ferner für Folgendes angepasst ist:
Ändern der vom aktiven Antennensystem definierten Zelle durch Ändern einer Größe und/oder eines Bereichs der vom aktiven Antennensystem definierten Zelle.

13. Erste Basisstation nach Anspruch 9, wobei die erste Basisstation ferner für Folgendes angepasst ist:
Ändern der vom aktiven Antennensystem definierten Zelle durch Deaktivieren der vom aktiven Antennensystem definierten Zelle.

14. Erste Basisstation nach Anspruch 9, wobei die erste Basisstation ferner für Folgendes angepasst ist:
Ändern der vom aktiven Antennensystem definierten Zelle durch Aktivieren der vom aktiven Antennensystem definierten Zelle.

15. Erste Basisstation nach einem der Ansprüche 12-14, wobei der Zellauslegungsänderungsindikator eine Identifizierung der vom aktiven Antennensystem definierten Zelle beinhaltet.

## Revendications

1. Procédé de fonctionnement d'une première station de base dans un réseau d'accès radio qui inclut une pluralité de stations de base, dans lequel la première station de base inclut un système d'antenne actif, le procédé comprenant :
la communication (12-6, 13-6, 16-4) d'un indicateur de modification de configuration de cellule(s) entre la première station de base et une deuxième station de base du réseau d'accès radio,
**caractérisé en ce que** l'indicateur de configuration de cellule(s) comprend l'un d'une pluralité d'indices de configuration de cellule(s), dans lequel chacun de la pluralité d'indices de configuration de cellule(s) indique une configuration différente d'une cellule ou de cellules qui est/sont définie(s) par le système d'antenne actif.

2. Procédé selon la revendication 1, le procédé comprenant en outre :
la modification (12-3, 16-3) d'une cellule qui est définie par le système d'antenne actif, dans lequel la communication de l'indicateur de modification de configuration de cellule(s) comprend la transmission de l'indicateur de modification de configuration de cellule(s) depuis la première station de base jusqu'à la deuxième station de base en réponse à une modification de la cellule qui est définie par le système d'antenne actif.

3. Procédé selon l'une quelconque des revendications 1 et 2, dans lequel la communication de l'indicateur de modification de configuration de cellule(s) comprend la transmission (12-6) de l'indicateur de modification de configuration de cellule(s) depuis la première station de base jusqu'à la deuxième station de base en réponse à la réception d'un rapport de défaillance de liaison radio, RLF, au niveau de la première station de base depuis un terminal sans fil (12-5).

4. Procédé selon l'une quelconque des revendications 1 et 2, dans lequel la communication de l'indicateur de modification de configuration de cellule(s) comprend la transmission (13-6) de l'indicateur de modification de configuration de cellule(s) depuis la première station de base jusqu'à la deuxième station de base en réponse à la réception d'un message d'indication de défaillance de liaison radio depuis une troisième station de base (13-5).

5. Procédé selon l'une quelconque des revendications 1 à 4, dans lequel la communication de l'indicateur de modification de configuration de cellule(s) comprend la communication de l'indicateur de modification de configuration de cellule(s) en tant qu'élément d'information, IE, d'un message d'indication de défaillance de liaison radio, RLF.

6. Procédé selon l'une quelconque des revendications 1 à 4, dans lequel la communication de l'indicateur de modification de configuration de cellule(s) comprend la communication de l'indicateur de modification de configuration de cellule(s) en tant qu'élément d'information, IE, d'un message de rapport de transfert.

7. Procédé selon l'une quelconque des revendications 1 à 4, dans lequel la communication de l'indicateur de modification de configuration de cellule(s) comprend la communication de l'indicateur de modification de configuration de cellule(s) en tant qu'élément d'information, IE, d'un message de mise à jour de configuration.

8. Première station de base pour une utilisation dans un réseau d'accès radio qui inclut une pluralité de stations de base, où la première station de base comprend un système d'antenne actif qui inclut une pluralité d'éléments d'antenne, dans lequel la première station de base est adaptée de manière à :
communiquer un indicateur de modification de configuration de cellule(s) entre la première station de base et une deuxième station de base, **caractérisé en ce que** l'indicateur de configuration de cellule(s) comprend l'un d'une pluralité d'indices de configuration de cellule(s), dans laquelle chacun de la pluralité d'indices de configuration de cellule(s) indique une configuration différente d'une cellule ou de cellules qui est/sont définie(s) par le système d'antenne actif de la première station de base

9. Première station de base selon la revendication 8, dans laquelle la première station de base est en outre adaptée de manière à :
modifier une cellule qui est définie par le système d'antenne actif et communiquer l'indicateur de modification de configuration de cellule(s) en transmettant l'indicateur de modification de configuration de cellule(s) à la seconde station de base en réponse à une modification de la cellule qui est définie par le système d'antenne actif.

10. Première station de base selon la revendication 9, dans laquelle la première station de base est en outre adaptée de manière à :
modifier la cellule qui est définie par le système d'antenne actif en éclatant une première cellule selon des deuxième et troisième cellules qui sont plus petites que la première cellule.

11. Première station de base selon la revendication 9, dans laquelle la première station de base est en outre adaptée de manière à :
modifier la cellule qui est définie par le système d'antenne actif en fusionnant des première et deuxième cellules selon une troisième cellule qui est définie par le système d'antenne actif, la troisième cellule étant plus grande que les première et deuxième cellules.

12. Première station de base selon la revendication 9, dans laquelle la première station de base est en outre adaptée de manière à :
modifier la cellule qui est définie par le système d'antenne actif en modifiant une taille et/ou une portée de la cellule qui est définie par le système d'antenne actif.

13. Première station de base selon la revendication 9, dans laquelle la première station de base est en outre adaptée de manière à :
modifier la cellule qui est définie par le système d'antenne actif en invalidant la cellule qui est définie par le système d'antenne actif.

14. Première station de base selon la revendication 9, dans laquelle la première station de base est en outre adaptée de manière à :
modifier la cellule qui est définie par le système d'antenne actif en validant la cellule qui est définie par le système d'antenne actif.

15. Première station de base selon l'une quelconque des revendications 12 à 14, dans laquelle l'indicateur de modification de configuration de cellule(s) inclut une identification de la cellule qui est définie par le système d'antenne actif.
